Europäisches Patentamt

(19) European Patent Office

Office européen des brevets

(11) Publication number: **0 379 520 B1**

(12) **EUROPEAN PATENT SPECIFICATION**

(45) Date of publication of patent specification :
13.11.91 Bulletin 91/46

(51) Int. Cl.⁵ : **G01C 19/64, G02B 6/28**

(21) Application number : **88908589.0**

(22) Date of filing : **31.08.88**

(86) International application number :
**PCT/US88/03040**

(87) International publication number :
**WO 89/02060 09.03.89 Gazette 89/06**

(54) **FIBER OPTIC GYROSCOPE WITH IMPROVED BIAS STABILITY AND REPEATABILITY AND METHOD.**

(30) Priority : **01.09.87 US 91972**

(43) Date of publication of application :
**01.08.90 Bulletin 90/31**

(45) Publication of the grant of the patent :
**13.11.91 Bulletin 91/46**

(84) Designated Contracting States :
**DE FR GB IT**

(56) References cited :
**EP-A- 0 038 023**
**EP-A- 0 212 769**
**WO-A-82/03456**
**GB-A- 2 121 532**

(56) References cited :
**IEEE Spectrum, volume 23, no. 3, March 1986,
IEEE, (New York, US), B. Yoon Kim et al.:
"Fiber-optic gyroscopes", pages 54-60 see
the whole document**

(73) Proprietor : **LITTON SYSTEMS, INC.**
**360 North Crescent Drive**
**Beverly Hills, CA 89210 (US)**

(72) Inventor : **PAVLATH, George, A.**
**3513 Calle Quebracho**
**Thousand Oaks, CA 91360 (US)**

(74) Representative : **Godsill, John Kenneth et al
Haseltine Lake & Co. Hazlitt House 28
Southampton Buildings Chancery Lane
London WC2A 1AT (GB)**

**Description**

Background of the invention

This invention is a rotation sensor and particularly a fiber optic rotation sensor. Still more particularly, it is a fiber optic rotation sensor whose bias is stable and repeatable.

A fiber optic ring interferometer comprises a fiber optic loop that guides injected counter-propagating optical signals. It has at least one, and it may have many closed loops. It is described herein as a single loop of fiber optic material. After traversing the loop, the counter-propagating signals combine and interfere either constructively or destructively to form interference fringes which may be counted. The count by an electrical counter forms an electrical output signal for the instrument. The intensity of the optical signal depends upon the relative phase of the counter-propagating signals.

Fiber optic ring interferometers with injected optical signals are used to sense rotation of the fiber loop. Rotation of the loop, about a sensing axis enclosed by the loop, creates a phase difference between the counter-propagating signals. The amount of phase difference is a measure of the angular velocity of the loop. The optical interference fringes produced by beating the counter-propagating signals are a measure of the rotation rate of the loop.

To be suitable for inertial navigation, a rotation sensor must have a very wide sensing range of rotation rates from less than 0.01 degrees per hour to more than 1,000 (or $10^3$) degrees per second. 0.01 degrees per hour is $(2.77)(10^{-6})$ degrees per second. The ratio of of $(10^3)$ to $(2.77)(10^{-6})$ is $(3.6)(10^8)$, a dynamic range of over eighty decibels.

In many fiber optic angular rate sensors the optical signals are polarized. One deliberately polarizes the injected signals.

If the fibers of the rate sensor are perfect (or at least high quality), the nature of the polarization of the extracted signals are known. Thus, in an optical fiber rotation sensing system errors depend, partly, on changes in polarization which are caused by low quality polarizers at the injection of the optical signals.

It will be appreciated that familiarity with polarization of optical signals and propagation of optical signals within an optical fiber promotes an understanding of the present invention.

An optical fiber comprises a central core and a surrounding cladding. It may also have a protective jacket. The refractive index of the cladding is less than that of the core. The core diameter is very small so that only one spatial mode of light is transmitted.

It is well-known that an optical signal may be represented by a time-varying electromagnetic field comprising orthogonal electric and magnetic field vectors having a frequency equal to the frequency of the optical signal. An electromagnetic wave propagating through a guiding structure can be described as a set of electromagnetic propagation modes. The permissible distributions of the electric and magnetic fields within the guiding structure, each mode having a different propagation velocity, are called the normal modes of field distribution of the guiding structure.

The bias error of a rotation sensor is the signal output when there is no signal input, which is a primary source of error in using fiber optic Sagnac rings as rotation sensors. If the bias were a known constant, it could be subtracted from the output signal to produce a true measure of angular rotation or velocity, but it does not remain constant over time and with temperature variations.

The main sources of bias error in fiber gyroscopes are imperfect polarizers and polarization cross coupling in the fiber.

The extinction ratio of a polarizer, usually measured in decibels, is the ratio of the undesired polarization signal in the output signal to the undesired polarization signal in the input signal This error source was first identified by Kintner, Opt. Lett., Vol. 20, No. 6, p. 154 (1981). An ideal polarizer should have an infinite (very high) extinction ratio. The maximum bias error may be expressed as

$$\phi_e = 2\varepsilon \, |a_B/a_A| \, |t_{xy}/t_{xx}|$$

where $\phi_e$ is the maximum phase bias error; $\varepsilon$ is the polarizer field extinction ratio; $a_A$ and $a_B$ are the fields input to the polarizer from the source perpendicular and parallel to the polarizer transmission axis; $t_{xy}$ is the polarization cross coupling in the fiber loop; and $t_{xx}$ is the polarization retention for the fiber loop. Equation (1) is modified for fiber optic volation sensors or gyroscopes in which the input optical signal is not completely polarized or if the input optical signal is depolarized in the gyroscope. Then $a_B$ represents the electric field com-

2

ponent delivered to the polarizer normal to the transmission axis and coherent with the electric field aligned with the transmission axis, and $t_{xy}$ represents the coherent polarization cross coupling in the fiber loop.

Fiber optic gyroscopes operating with polarized optical signal require polarizers having extinction ratios of more than 100 dB to keep bias errors below 0.01 deg/hr. Fiber optic gyroscopes using unpolarized optical signals require extinction ratios in the 60-100 dB range, and they require the use of high quality polarization-maintaining (PM) fiber throughout the gyroscope.

A linear polarization state in a fiber optic rotation sensor may be achieved with some type of linear polarizer such as the fiber optic polarizer described in United States Patent No. 4,386,822 to Bergh. Bergh discloses a fiber optic polarizer including a length of optical fiber mounted in a curved groove in a quartz substrate. The substrate and a region of the optical fiber are ground and polished to remove a region of the cladding from the fiber to form an interaction region. The region of the fiber in the groove is convexly curved as viewed looking toward the polished surface. The birefringent crystal is mounted on the substrate over the interaction region near to the core of the fiber optic material. The crystal is positioned to intersect part of the path of optical signals propagating in the optical fiber so that evanescent field coupling couples optical signals of undesired polarizations from the optical fiber into the crystal.

The birefringent crystal has different signal velocities for signals of different polarizations. With polarizations for which the wave velocity in the crystal is less than the wave velocity in the optical fiber, the optical signals carried by the optical fiber excites a bulk wave in the crystal, which causes optical signals to escape from the optical fiber into the crystal. No bulk wave is excited in the crystal for polarizations having wave velocities in the crystal greater than in the fiber so that light having such polarizations remains guided within the optical fiber. The refractive indices of the crystal are such that a signal having a polarization along one of the main axes of the crystal propagates more slowly in the crystal than in the optical fiber; and a signal having a polarization along a second main axis propagates at a greater speed in the crystal than in the optical fiber. The polarization state input to the polarizer is arbitrary. The polarizer couples optical signals of undesired polarizations out of the fiber and permits optical signals having only a selected desired polarization to propagate through the fiber.

Polarizers using naturally occurring crystals have only pre-defined refractive indices determined by the crystalline structure, and those refractive indices may not be the needed ones. They may not bond adequately to the substrate, and they are usually not environmentally stable.

According to standard specifications, for a rotation sensor to be suitable for use in inertial guidance systems, it must be very stable, and it must be operable over a range of temperature from -55 degrees to +125 degrees Celsius. An effective crystal polarizer is highly dependent upon the refractive index of its crystal. Unfortunately, the refractive indices of birefringent crystals are highly temperature-sensitive.

If the light incident on the polarizer normal to the transmission axis, has a low degree of coherence with the light parallel to the transmission axis and if the fiber loop has small coherent cross coupling, significant reductions in polarizer extinction ratio requirements are possible.

The coherence between the input components of the electric field, referenced to the polarizer axis, and coherent cross coupling in the loop can be reduced by using a polarization-maintaining fiber and a broadband source. If the main axes of the fibers are not aligned precisely with the polarizer axis, the signals are still coherent. Because of the difficulty in locating the main axis and in maintaining the main axis in a known orientation during fabrication of the gyroscope, aligning the fiber axes with the polarizer axis is difficult.

Optical signals launched coherently into both axes of a polarization-maintaining fiber has its coherence reduced to 1% in a distance of 0.3 to 1.0 meter. Because of imperfections in the fiber, longer lengths of fiber do not reduce the coherence below 1%. Waveguide imperfections and differential loss between the two polarizations and also other competing processes tend to restore the coherence. These imperfections and losses appear to be essential in the sense that they are now beyond the control of the manufacturer. It appears that the only practical way to reduce the coherence between the two polarizations is to increase the birefringence of the polarization-maintaining fiber. Increased birefringence causes the differently polarized signals to lose coherence in a shorter distance and prevents the competing processes from building to a high level.

To produce birefringence, fibers usually have a stress-induced birefringence or have an elliptical core. Additional stress-induced birefringence would shatter the fiber, and highly ellipsoidal cores would cause unacceptably high loss.

It has been suggested that precise alignment of the polarizer axes with the waveguide main axes and increased birefringence, resulting in a lower degree of coherence between the polarizatiions, are realized by fabricating a loop coupler and polarizer on an LiNb03 substrate using integrated optical techniques. The gyro uses high quality (i.e., high extinction ratio) polarization-maintaining fiber in the fiber loop and between a superluminescent diode (or SLD)/photodetector and the LiNb03 chip.

Optical damage is still a problem in LiNb03. The long term stability of integrated optics circuits in LiNb03 is still in serious question. In addition, the high scattering loss (0.1-0.5 dB/cm) in integrated optics circuits in

LiNbO3 limits the performance of such fiber optic gyroscopes, for it produces noise, bias error, and scale factor error.

## SUMMARY OF THE INVENTION

According to one aspect of the invention, there is provided a fiber optic rotation sensor having a substrate; a first optical fiber having a central core and a surrounding cladding, a first length of said first optical fiber having a region of said cladding removed therefrom to form a first planar cladding surface, said first length of said first optical fiber being mounted to said substrate;

a second optical fiber having a central core and a surrounding cladding, a second length of said second optical fiber having a region of its said cladding removed to form a second planar cladding surface, the length of said second optical fiber being mounted to said substrate;

a first fiber optical coupler formed between said first and second optical fibers; and means for introducing an optical signal into said first optical fiber; and an angular velocity sensing coil of optical fiber, characterized by:

a first guided wave reciprocity polarizer formed on the planar cladding surface of said first optical fiber, said polarizer having a transmission axis aligned with an axis of birefringence of said first optical fiber to interact with said first optical fiber to remove a first predetermined linear polarization component from optical signals guided by said first optical fiber while permitting a second predetermined linear polarization component to propagate unattenuated in said first optical fiber;

a third optical fiber having a central core and a surrounding cladding, a third length of said third optical fiber having a region of its said cladding removed to form a third planar cladding surface, the length of said third optical fiber being mounted to said substrate;

a second fiber optical coupler formed between said first and third optical fibers; and

said angular velocity sensing coil being arranged to guide optical signals in both directions between said first and third optical fibers, said first and third optical fibers and said second optical coupler cooperating to introduce counterpropagating light optical signals into said sensing coil.

IEEE Spectrum, volume 33, number 3, March 1986, pp 54-56 discloses features of the precharacterising portion of the last paragraph but it does not suggest a fiber optical coupler and polarizer in an integrated arrangement.

It will be appreciated that a sensor according to the invention can have improved bias stability and repeatability and a greatly reduced polarizer extinction ratio. It also pertains to a method for making such a gyroscope.

A fiber optic gyroscope according to possible embodiments of the invention may use at least one polarizer that has an extinction ratio of only 20-50 dB.

The fabrication method of the invention may be used to make an all fiber gyroscope having low loss, low scatter and very high birefringence with no integrated or bulk optics components. The method may be used both on gyroscopes with continuous fibers and with spliced components.

A reciprocity polarizer is a two-port polarizer which is bidirectional. That is, a signal entering the first port leaves the second port only if it is polarized according to the predetermined polarization of the polarizer. Similarly, a signal entering the second port leaves the first port only if it is polarized according to the predetermined polarization of the polarizer.

A fiber optic rotation sensor embodying the present invention may comprise the following items.

1. A substrate that is preferably formed of fused silica, carrying a first optical fiber with a first region of its length mounted to the substrate.

2. A first planar cladding surface is formed on a first part of the first region of the length of the first optical fiber.

3. A second optical fiber has a second region of its length mounted to the substrate.

4. A second planar cladding surface is formed on a second part of the second region of the length of the second optical fiber.

5. A first optical coupler is formed between the first and second regions of the first and second optical fibers, respectively.

6. A optical signal source means, preferably an incoherent or partly incoherent source such as a SLD, is positioned to deliver an optical signal into the first optical fiber.

7. A reciprocity polarizer is formed on the planar cladding surface of the first optical fiber. The polarizer has a transmission axis aligned with an axis of birefringence of the first optical fiber to interact with the first optical fiber to remove an undesired linear polarization component from optical signals guided by the first optical fiber while permitting a desired linear polarization component to travel unattenuated in the first opti-

4

cal fiber.

8. A sensing coil of optical fiber is arranged to guide light between the first and second optical fibers. The first and second optical fibers and the optical coupler cooperate to deliver counterpropagating optical signals into the sensing coil.

The fiber optic rotation sensor may further comprise the following.

9. A third region of a third optical fiber, having a central core and a surrounding cladding, mounted to the substrate. A part of the third region has the cladding removed and deformed to form a third planar cladding surface.

10. A second optical coupler is formed between the first and third regions of the first and third optical fibers, respectively.

11. Optical signal frequency stabilizing means, including is connected to sense the frequency of the applied signal received from an optical signal source, and to deliver a frequency control signal to the optical signal source.

Guided Wave Polarizers, including form birefringent polarizers, plasmon polarizers, and bulk crystal polarizers may be mounted directly onto the fiber. The cladding of the fiber is partly removed, and the polarizer is attached to a polished surface of the remainder of the fiber in a position within the evanescent field of the fiber. The fiber need not be separated. Although the bulk crystal polarizer may be used it is considered preferable to use either plasmon polarizers or form birefringent polarizers mounted to the fiber.

A portion of the cladding is removed along a segment of the fiber. The removed portion may extend into the core region, or it may be separated slightly from the core.

A form birefringent stack may be designed and adjusted into one of four configurations: (1) The TE mode is attenuated and the TM mode is unattenuated; (2) neither mode is attenuated; (3) the TM mode is attenuated and the TE mode is unattenuated; or (4) both modes are attentuated. The stack may, thus, be used as a polarizer or as a sink.

A form birefringent stack is a spatially periodic stack whose period is less than a half-wave of the optical signal being processed. The stack is sufficiently thick that it either radiates one or both of the modes of propagation, or it absorbs energy, in the form of heat, from one or both modes. Placing the stack in the evanescent field of the fiber couples the fiber energy into the stack.

A plasmon stack may also be used. Such stack may have a pair of dielectric films with a thick piece of metal on the outside of the stack. The integrated structure of the invention uses a first fiber with two other fibers coupled to the first fiber. Two sinks are attached to the two couplers to extract unwanted signals from the apparatus. A guided wave polarizer, preferably a form birefringent polarizer, is attached in a special way to the first fiber as a reciprocity polarizer between the two couplers. Two other guided wave polarizers are attached to the first fiber with the said couplers positioned between said reciprocity polarizer and said second and third polarizers.

The fiber optic rotation sensor may further comprise the following items.

12. A first form birefringent polarizer is formed on the substrate and on the first cladding surface such that the first optical coupler is between the first form birefringent polarizer and reciprocity polarizer.

13. A second form birefringent polarizer may be formed on the first cladding surface such that the second optical coupler is between the second form birefringent polarizer and the reciprocity polarizer.

14. The reciprocity polarizer may comprise a plasmon polarizer having at least one layer of a material deposited on the first planar cladding surface such that the polarizer transmission axis is self aligned with the axis of birefringence of the first fiber.

15. The reciprocity polarizer may further comprise a plurality of dielectric layers of different refractive indices. Alternatively, the layers may be both or either dielectric or metal. In a form birefringent polarizer, usually two dielectrics such as silica and titania are used, and the combined thickness of a pair of the films forms a first spatial period which is less than one half-wavelength of the optical signal. For example, the core of a fiber could have a diameter of 5-10 microns, and the cladding could have a diameter on the order of 80 microns. Perhaps 30 microns are cut off of one radius of the cladding. A form birefringent stack, perhaps 10 microns thick, of a plurality of alternate films of silica and titania may be fastened to the polished surface of the cut cladding.

16. The reciprocity polarizer may also comprise

(a) a core surface formed at a location on the first optical fiber from which all of the cladding and a region of the core have been removed, and

(b) a form birefringent stack placed on the core surface.

17. A fiber optic plasmon polarizer may comprise

(a) a metal film formed on the core surface.

(b) A dielectric layer may be placed between the metal layer and the core surface.

5

Preferably a single mode fiber is used. Other fibers, other than a multimode fiber, may be used.

Polarization maintaining fibers may be used.

Second and third fibers are coupled by spaced couplers to a first fiber.

Predetermined regions of the three fibres may be ground and polished to have substantially flat surfaces for receiving polarizers and sinks.

The three fibers, together with their couplers, are rigidly mounted and attached onto a substrate. The regions for mounting polarizers and sinks are covered with photo-resist material which is developed and the attaching material is etched away in those regions. Etching away the cladding portions ensures that the evanescent field of the fiber intercepts the polarizers and sinks.

The films for the polarizers and sinks are laid down, using masks and selectively depositing in the predetermined regions, within the evanescent field volumes, onto the polished cladding surfaces.

After the polarizers and sinks have been built in layers onto the cladding, the entire apparatus is preferably potted to protect the films.

Prior art birefringences experienced, for example, by integrated optics, are on the order of less than one. The birefringence experienced by the stacks of embodiments of this invention are of the order of two, and they have composite indices of refraction of about 0.10 to about 0.17.

Such high birefringes reduce the errors experienced in fiber optics gyros.

BRIEF DESCRIPTION OF THE DRAWINGS

Figure 1 illustrates a prior art optical gyroscope including a lithium niobate chip;

Figure 2 illustrates a coil of optical fiber and a pair of adjacent coupled lengths of bare fiber having the jacketing removed;

Figure 3 illustrates the lengths of bare fiber of Figure 2 mounted to a substrate;

Figure 4 illustrates a tapered edge of the substrate of Figure 3, a region of the bare fiber, and a region of the jacketed fiber mounted below the polishing plane to the edge of the substrate;

Figure 5 is a cross sectional view along line 5-5 of Figure 3 showing the bare fibers spaced apart on the substrate;

Figure 6 is a cross sectional view along line 6-6 of Figure 3 showing the central region of the optical coupler formed between the two lengths of bare fiber;

Figure 7 is an elevation view showing a stack of two alternating dielectric layers;

Figure 8 is a plan view showing a mask formed to cover a region of the substrate of Figure 3 and of a region of one of the lengths of optical fiber mounted to the substrate;

Figure 9 is a plan view showing a dielectric stack formed on the substrate of Figure 8;

Figure 10 is a plan view showing a pair of dielectric stacks and a polarizer formed on the substrate of Figure 8;

Figure 11 is a cross sectional view of the substrate and fibers of Figure 8 showing a method of attaching fibers of different diameter to the substrate;

Figure 12 is a plan view of a complete fiber optic gyroscope system including the substrate and fibers of Figure 8 mounted thereto;

Figure 13 is a cross sectional view of a phase modulator that may be included in the system of Figure 12;

Figure 14 is a cross sectional view of the phase modulator of Figure 13;

Figure 15 schematically represents a rotating half-wave plate frequency shifter with optical input signals and optical output signals;

Figure 16 graphically illustrates the effect of the frequency shifter of Figure 15 on an wave signal;

Figure 17 illustrates an acoustic wavefront impinging upon an optical fiber;

Figure 18 illustrates a frequency shifter that may be included in the fiber optic gyroscope system of Figure 12;

Figure 19 is a circuit diagram of a circuit for controlling a frequency shifter that may be included in the fiber optic gyroscope system of Figure 12;

Figures 20 and 21 are frequency wave vector diagrams graphically illustrating the effects of the frequency shifter of Figure 19 on an optical signal;

Figure 22 schematically illustrates a frequency control device for stabilizing an optical signal source included in the system of Figure 12;

Figure 23 is a cross sectional view of polarization maintaining fiber that may be included in the frequency control device of Figure 22;

Figure 24 is an elevation view of a stack of alternating layers of dielectrics that may be used to form the polarization maintaining fiber of Figure 23.

Figure 25A and 25B schematically illustrate devices that may be used for stabilizing an optical signal source included in the system of Figure 12.

Figure 26 schematically illustrates a thermally compensated reference interferometer device for stabilizing an wave signal source included in the system of Figure 12;

Figure 27 schematically illustrates orientation of crystals in the thermally compensated reference interferometer of Figure 26 relative to the polarization of the incident light;

Figure 28 graphically illustrates the spectrum of an illustrative superluminescent diode used as an optical source in a fiber optic gyroscope;

Figure 29 graphically illustrates the visibility of the interference pattern produced by the thermally compensated reference interferometer of Figure 26 as a function of the optical path difference in the interferometer;

Figure 30 graphically illustrates the output of the thermally compensated reference interferometer of Figure 1;

Figure 31 graphically illustrates the fractional phase shift per degree Centigrade as a function of the ratio of the lengths of the crystals included in the thermally compensated reference interferometer of Figure 26;

Figure 32 graphically represents the slope sensitivity of the output of a reference interferometer that may be included in the optical source stabilization system of possible embodiments of the invention as a function of the optical path difference in the reference interferometer;

Figure 33 graphically represents the stabilization of scale factor of a fiber optic rotation sensor versus the optical path difference in the reference interferometer;

Figure 34 graphically illustrates the shift of the scale factor of a fiber optic rotation sensor versus the shift of the centroid of the spectral distribution of the optical source;

Figure 35 illustrates a form birefringent cutoff polarizer that may be included in the fiber optic gyroscope of Figure 12; and

Figure 36 is a cross sectional view of the form birefringent cutoff polarizer of Figure 35.

## DESCRIPTION OF THE PREFERRED EMBODIMENT

### I. Introduction

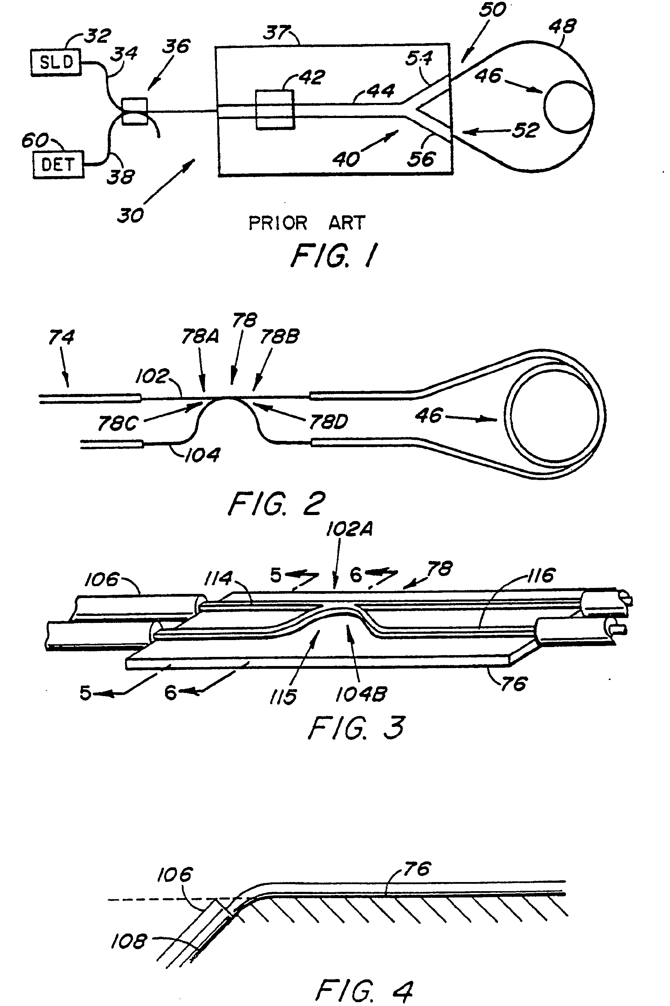

Referring to Figure 1, to illustrate the advantages of the present embodiment over the prior art, a brief description of a prior art optical gyroscope 30 is presented. A superluminescent diode light source 32 delivers light to an optical fiber 34. The light travels to a directional coupler 36 that couples light from the fiber 34 to an optical fiber 38. Light from the source 32, that remains in the fiber 34, travels from the coupler 36 to a substrate 37 formed from a lithium niobate chip. The length of fiber 34 between the coupler 36 and the substrate 37 is sometimes called a spatial filter. A Y-shaped coupler 40 is formed, by well-known doping techniques, in the substrate 37. A polarizer 42 is formed, as a superstrate, over a first leg 44 of the coupler 40. A loop 46 of an optical fiber 48 has its ends 50 and 52 connected to receive waves from a pair of legs 54 and 56, respectively, of, the coupler 40, and the loop 46 guides two counterpropagating optical signals. The counterpropagating signals, after traversing the loop 46, are delivered to the legs 56 and 54, from whence they are coupled back into the fiber 34. The coupled-back signals combine and interfere in the coupler leg 44 to form a fringe pattern indicative of the rotation of the loop 46 about an axis normal to the sheet of the drawings. The coupler 36 couples a region of the interfering signals into the fiber 38. A detector 60 receives the signals from the fiber 38 to form electrical signals indicative of the rotation of the loop 46.

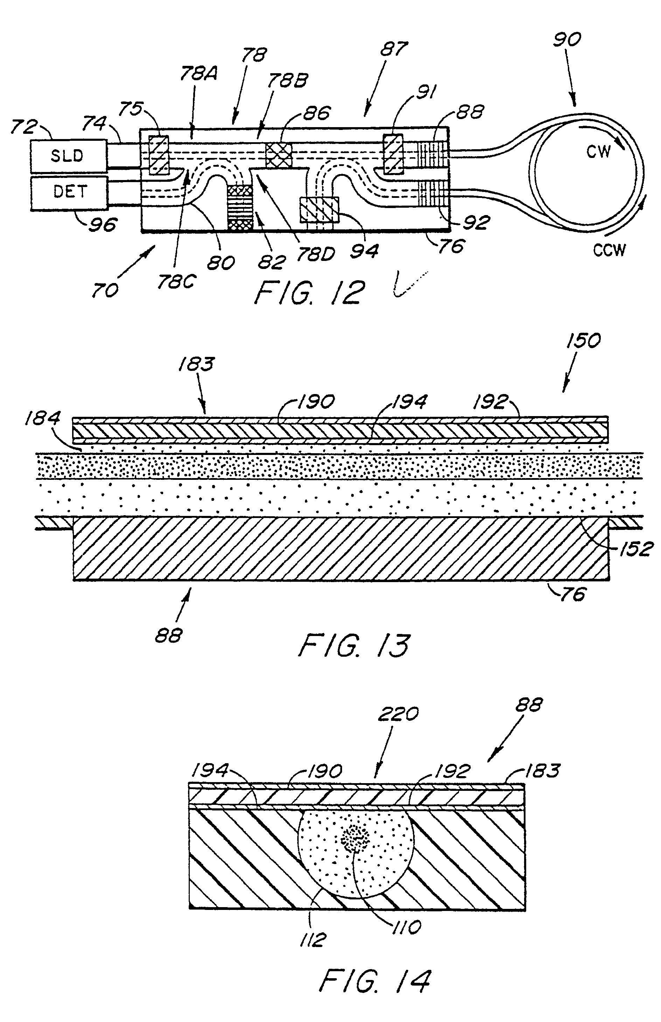

To compare the apparatus of this embodiment, refer to Figure 12. A fiber optic gyroscope 70 includes an optical source 72 that preferably is a superluminescent diode (SLD) which produces light having a broad frequency band. Using the SLD in the fiber optic gyroscope 70 reduces the Kerr effect errors.

The source 72 delivers an optical signal to an optical fiber 74, which is mounted to a aubstrate 76 that preferably comprises fused silica. The signal initially travels past a form birefringent polarizer 75 formed adjacent the fiber 74 on the substrate 76. The signal travels in the fiber 74 to an optical coupler 78 that couples light between the fiber 74 and an optical fiber 80. A region of the light from the source 72 enters the fiber 80 and travels past a wavelength control device 82 that may be formed on the substrate 76.

Light from the source 72 remaining in the fiber 74 travels past a reciprocity polarizer 86 formed on the substrate 76 and travels to a fiber optic directional coupler 87. Light that travels through the coupler 87 travels past a form birefingent polarizer 91 formed on the substrate 76 adjacent the fiber 74. After traversing the region of the fiber 74 adjacent the form birefringent polarizer 91, the signal impinges upon a phase modulator 88 that is also preferably formed on the substrate 76. The phase modulated light signal then travels clockwise through a coil 90 formed in the optical fiber 74.

An arrow labeled CW indicates the clockwise signal. The coupler 87 preferably acts as a 50/50 signal splitter by coupling about 50% of the light incident thereon from the left into the coil 90 to form a counterclockwise signal. After traversing the coil 90, the clockwise signal travels past a frequency shifter 92 and impinges upon the coupler 87 from the right.

An arrow labeled CCW indicates the counterclockwise signal. The counterclockwise signal travels past the frequency shifter 92 before entering the coil 90.

The phase modulator 88 phase modulates the counterclockwise signal after it has traversed the coil 90. The phase modulated CCW signal then impinges upon the coupler 87 from the right. Half of the counterclockwise signal travels through the coupler 87 toward the reciprocity polarizer 86. Half of the clockwise signal couples in coupler 87 and travels toward the reciprocity polarizer 86. The part of the clockwise signal that travels through the coupler 87, and the part of the counterclockwise signal that couples, are delivered to an absorbing pad 94, which prevents this signal either from leaving the fiber 74 or reflecting back into the coil 90.

Parts of the two signals combine in the coupler 87 to form an interference pattern. The combined signals travel through the reciprocity polarizer 86 to the coupler 78, which couples a part of the interfering signals into the fiber 80. A part of the interference pattern is delivered to a detector 96 that creates an electrical signal which is a measure of the phase difference between the clockwise and counterclockwise signals. This phase difference is related to the rotation rate of the coil about its sensing axis.

The components of the fiber optic gyroscope 70 and methods for fabricating them on the substrate 76 are described in detail below.

## II. Components of the Fiber Optic Gyroscope

### A. The Fiber Optic Coupler 78

The couplers 78 and 87 preferably are substantially identical: therefore, only the coupler 78 is described in detail.

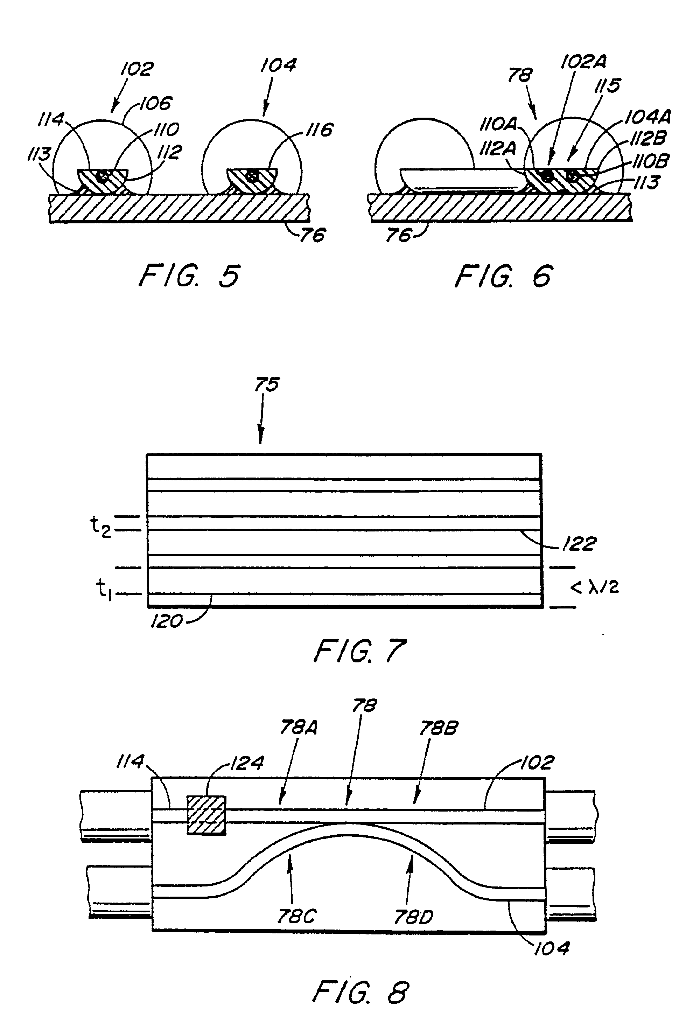

Referring to Figure 2, two lengths 102 and 104 of ordinary non-polarization-maintaining fiber, or two sections of the fiber 74, are stripped of their jackets 106 and 107 over a distance of several centimeters. Figure 4 shows a side view of an edge 108 below the polishing surface of the substrate 76. In Figure 4, the ends of the substrate 76 are preferably tapered to permit the fiber jacket 106 to be below the level of the top of the substrate 76. Figure 4 shows only the jacket 106, but the technique illustrated in Figure 4 is also used to mount the fiber segment 104 to the substrate 76. The jackets 106 and 107 are then attached to the substrate 76 with a suitable bonding agent such as epoxy resin.

Referring to Figures 3, 5 and 6, the fiber 74 is formed to have a central core 110 and a surrounding cladding 112. The fiber segments 102 and 104 converge and are joined at the coupler 78, as shown in Figure 6, with cladding segments of the polished fibers placed adjacent one another on the substrate 76. The directional coupler 78 is formed between the two fiber sections 102 and 104 by fusing them together. A fused junction 113 between the cladding 112 and the substrate 76 is shown in Figures 5 and 6. The fiber sections 102 and 104 are also preferably fused, in the vicinity of the coupler 78, to the substrate 76. Energy is delivered to the adjacent segments of the fiber to fuse them to each other and to the substrate 76. A preferred method for delivering energy to the fiber segments 102 and 104 uses a laser (not shown) to raise their temperatures to the glass transition temperature to fuse the fibers to each other and to the substrate 76.

Still referring to Figure 6, the juxtaposed regions 102A and 104A form an interaction region 115 where the evanescent field of light traveled through each of the fiber segments 102 and 104 interacts with the other segment. Light is transferred between the fiber segments by evanescent field coupling at the interaction region 115. The fiber segment 102 comprises a central core 110A and a surrounding cladding 112A. The fiber segment 104 has a core 110B and a cladding 112B that are substantially identical to the core 110A and cladding 112A, respectively. The core 110A has a refractive index that is greater than that of the cladding 112A, and the diameter of the core 110A is such that light propagating within it is totally internally reflected at the core-cladding interface. Most of the optical energy guided by the fiber segment 102 is confined to its core 110A. However, solution of the wave equations for the fiber segments 102 and 104 and applying the boundary conditions shows that the energy distribution, although primarily in the core 110, includes a region that extends into the cladding 112 where the amplitude decays exponentially as the radius from the center of the fiber increases. The exponentially decaying region of the energy distribution within the cladding 112 is generally called the evanescent field. If optical energy, traveling through the fiber segment 102, extends a sufficient distance into the fiber segment 104, energy couples between them.

In Figure 2, the coupler 78 includes four ports labeled 78A, B, C and D. Ports 78A and B, which are on the left and right sides, respectively, of the coupler 78 correspond to the fiber segment 102. The ports 78C and D similarly correspond to the fiber segment 104. It is assumed that an optical signal input is applied to port 78A through the fiber 102. Depending upon the amount of coupling between the fibers 102 and 104, the signal travels through the coupler 78 and is delivered out of either one or both of ports 78B or D.

The "coupling constant" is defined as the ratio of the coupled power to the total output power. In the above example, the coupling constant is the ratio of the power output at port 78D to the sum of the power output at the ports 78B and D. This ratio is sometimes called the "coupling efficiency", which is usually expressed as a percent. Therefore, when the term "coupling constant" is used herein, it should be understood that the corresponding coupling efficiency is equal to the coupling constant times one hundred. The coupler 78 may be tuned to adjust the coupling constant to any desired value between zero and one by specifying the dimensions of the region of overlap of the evanescent fields, particularly by controlling the separation of the cores 110A and B.

The coupler 78 is highly directional, with substantially all of the power applied at one side arriving at the ports on the other side. Substantially all of the signal delivered to either or both of ports 78A and C is delivered, without appreciable contra-directional coupling, to ports 78B and D. The directional characteristic is bidirectional in that some light applied to either or both of ports 78B and D is delivered to ports 78A and C. The coupler 78 transmits and preserves the polarization of light.

Light that is coupled from one of the fiber segments 102 or 104 to the other undergoes a phase shift of $\Pi/2$, but light that passes straight through the coupler 78 without being coupled is not shifted in phase. For example, if the coupler 78 has a coupling constant of 0.5, and a optical signal is delivered into port 78A, the signals out of ports 78B and D are of equal magnitude; but the delivered signal at port 78D is shifted in phase by $\Pi/2$ from the signal delivered at port 78B.

## B. Evanescent Field Polarizer

In Figure 3, the substrate 76 and the unjacketed fiber segments 102 and 104 are polished optically flat to better than one fourth of the signallength of the optical signal received from the source 72 (Fig. 12). This polishing forms surfaces 114 and 116 on the fiber segments 102 and 104, respectively. To intercept the evanescent fields of the fiber segments 102, 104, surfaces 114 and 116 are about one micron or less from the core/cladding boundary.

The interaction between artificial dielectrics and the evanescent field of light guided by an optical fiber to form a birefringent polarizer is described in United States Patent No. 4,666,235, entitled "Stable Fiber Optic Polarizer" which issued May 19, 1987 from patent application 589,977, filed March 16, 1984 by George A. Pavlath, and which is assigned to Litton Systems, Inc., assignee of the present invention.

A form birefringent polarizer is an artificially created composite periodic grating structure, of two or more thicknesses, of two or more different materials, having different indices of refraction in each spatial period. A number of spatial periods of sequential overlying films are stacked and positioned on, in, or near a fiber core within a region of removed cladding to intercept the evanescent field of the fiber. It polarizes or filters as if it were fabricated of homogeneous birefringent material.

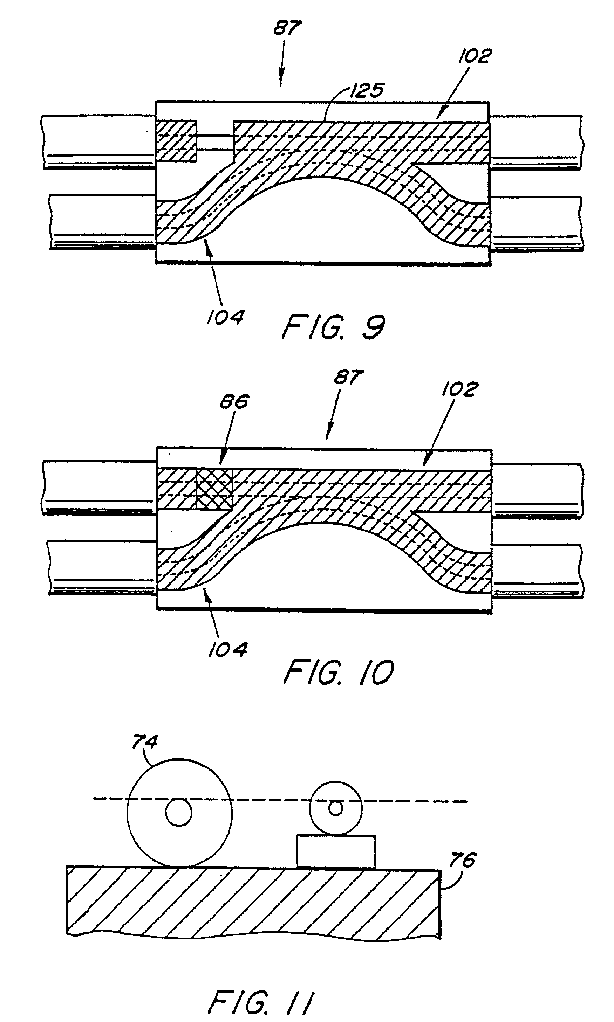

In Figures 8-10 and 12 a form birefringent polarizer 75 is formed onto the polished fiber section 102. A form birefringent polarizer may be a composite grating structure formed, as shown in Figure 7, of alternating layers 120 and 122 of a pair of dielectric materials having different dielectric constants n1 and n2 and different thicknesses $t_1$ and $t_2$, respectively. Such a device acts as if it were a homogeneous birefringent material. The combined thickness of two adjacent layers of dielectrics is called the period, p, of the form birefringent polarizer. The period is therefore

$p = t_1 + t_2$. A grating whose period is smaller than one-half the signallength of the incident radiation produces no diffracted orders. Using state of the art submicron fabrication technology, it is possible to produce a form birefringent polarizer to have a period substantially less than one-half the wavelength of coherent waves which ordinarily are used in fiber optic sensor technology.

It is convenient to express the thickness of the first dielectric layer as a fraction q of the period p so that the thickness of the first dielectric layer 120 is qp. For example, the period, p, may be 1,000 Angstroms; and the thickness qp of the second dielectric 122 may be 100 Angstroms. The first dielectric layer 120 may conveniently be formed of silicon-dioxide glass, and the second dielectric layer may be titanium-dioxide glass. The refractive indices of the layers 120 and 122 should differ from that of the cladding 112. Cladding 112 is usually fluorine doped silica.

Rigorous calculation of the electromagnetic properties of form birefringent polarizers in the optical region of the electromagnetic spectrum is difficult. The problem is greatly simplified by assuming that the grating period is much smaller than the optical wavelength, and to avoid diffraction it must be less than one halfwave length. If the grating period is less than half the optical wavelength in the fiber 74, there are no diffracted orders; and the form birefringent polarizer will act as an anisotropic medium.

The form birefringent polarizers can be treated as periodic stratified media sandwiched between two homogeneous dielectrics one being the fiber cladding, and the other being air. The cladding 112, adjacent the form birefringent polarizer 75, must be thin enough to cause the evanescent field of light energy propagating in the fiber 74 to interact with the form birefringent polarizer stack to couple out one polarization mode of energy from the fiber 74 into the form birefringent polarizer, and to allow a second polarization mode of energy to remain in the fiber 74. Optical signals with electric fields polarized parallel to and perpendicular to the layers of the stack encounter different refractive indices. Since the effective dielectric constant of the polarizer 75 is one value for signal polarizations parallel to the layers 120 and 122 and another value for polarizations normal to such layers, and the different dielectric constants depend upon the form of the stack, the polarizer 75 is said to be form birefringent.

### C. Cutoff Polarizers

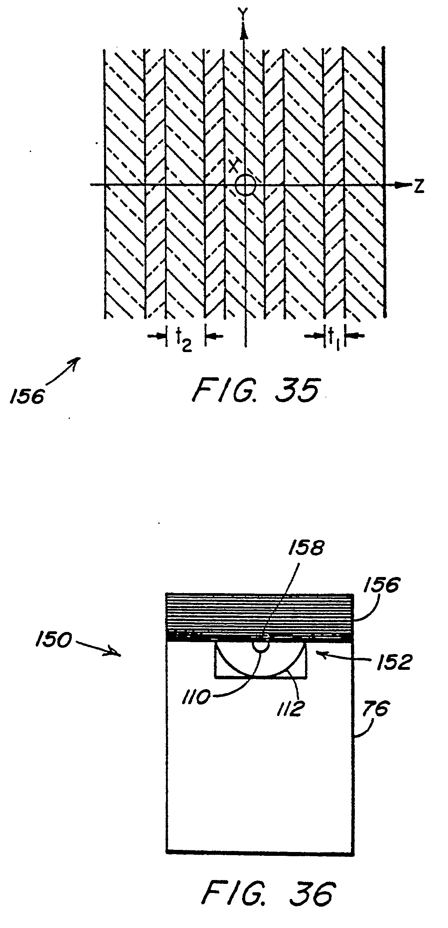

In Figures 35 and 36, to intercept the field of light inside the core 110, a cutoff polarizer 150 suitable for use in the fiber optic gyroscope 70 is formed by polishing into the core 110.. The cutoff polarizer 150 includes a segment 152 of the optical fiber 74 that is mounted to the substrate 76. A form birefringent stack 156, similar to the form birefringent polarizer 75, is positioned adjacent a generally planar interaction region 158 in the segment 152 of optical fiber 74.

The amount of birefringence is used herein to mean the difference between the two polarization dependent refractive indices of a medium that guides an optical signal. The velocity of light in an optical fiber is $v = c/n$, where c is the free space velocity of light and n is the refractive index of the fiber. The polarization component for which the fiber 74 has the lower refractive index has a greater velocity and, therefore, a smaller transit time in the fiber 74 than the other polarization component. The fiber 74 is birefringent, and the two polarization components are shifted in phase as they travel along the fiber.

If fiber 74 is designed to deliver only a single mode of optical energy, its core 110 normally has a circular cross section that is about 5 microns in diameter. When the refractive index of cladding 112 is substantially uniform and low compared to the core refractive index, almost all of the optical energy guided by fiber 74 is confined to core 110 . However, if the fiber segment 152 has an asymmetric refractive index distribution, core 110 has a cutoff diameter. If the core diameter is less than the cutoff diameter, the optical energy cannot be confined exclusively to core 110. The cutoff polarizer 150 uses the cutoff property to remove polarized signals parallel to the interaction region 158 from fiber 74.

In Figure 36, if a signal of mixed polarization is incident upon polarizer 150 in the direction into the drawing, the asymmetry in refractive index at the interaction region causes polarization components parallel to the interaction region 158 to radiate from the fiber. According to the usual convention, the direction of propagation is the x-axis. Assuming a right-hand coordinate system, the x-axis points into the plane of Figure 35, and the y-axis lies in the plane and is perpendicular to both the x- and z-axes. For the polarization perpendicular to the interaction region, the refractive index of form birefringent stack 156 is almost equal to that of the cladding, and such energy is guided by the internal reflection at the core-cladding boundary. The polarization component perpendicular to the surface experiences a decrease in effective core cross sectional area, which increases the evanescent field region of the guided signal and leads to cutoff.

Depending on whether the polished surface in Figure 36 is near or into the core and what the refractive indices and the fractional thicknesses of the dielectric layer are, the following situations are realizable:

1. To produce birefringence, both polarizations (i.e. parallel and perpendicular to the layers of the stack) of optical signals propagate through the fiber but at different velocities.

2. When one of the polarizations of optical signals propagates while the other is cutoff, or severely attenuated, the velocities of the two different polarizations of light are again different. Such birefringence occurs in a single polarization loop coupler-polarizer module.

3. Both optical signal polarizations are cutoff (attenuated), and their velocities are different. Optical energy is attenuated without reflection, and it is useful on the dead end of the first and second directional couplers in a fiber gyroscope.

### D. Phase Modulators

In Figures 13 and 14, The phase modulator 88 permits the addition of detectable phase shifts onto an electromagnetic carrier signal such as an optical signal. The phase shifts can be decoded at a receiver (not shown) connected to the detector 96 and the decoded information is extracted. The modulator 88 includes a substantially planar transducer 183 fixed to the substrate 76 and the fiber 102 by means of a layer 184 of epoxy resin or other appropriate adhesive. The transducer 183 is preferably formed of a layer of piezoelectric material 190 sandwiched between an upper electrode 192 and a lower electrode 194 of appropriate conductive material such as aluminum. A preferred piezoelectric material for use in the modulator 88 is lithium niobate.

Upon receipt of a voltage of alternating polarity from a signal generator (not shown) the piezoelectric layer 190 generates an acoustic signal that propagates in a direction orthogonal to the planar surface of the transducer 183. The material of the layer 190 may be poled for vibration either orthogonal to or collinear with the fiber 74 to generate longitudinal or shear modes of acoustic wave energy.

Vibration of the layer 190 generates an acoustic signal that propagates in a direction perpendicular to the optical axis of the fiber 74. The wavelength of the center frequency of this bulk acoustic wave is equal to one-half the thickness of the piezoelectric layer 190. The electrodes 192 and 194 may be formed to the desired thicknesses by a vacuum deposition or like thin film technique.

As the optical signal travels through the region of the fiber 74, within the block 182, and particularly that region adjacent the interaction region 220, the light interacts with the bulk acoustic wave that is launched by vibration of the piezoelectric transducer 183.

The size and materials of the lower electrode 194, adhesive layer 184 and the piezoelectric layer 190 are selected so their combined acoustic impedance matches the acoustic impedance of the region of the fiber segment 102 opposite the transducer 183. In response to the energy applied to the phase modulator 88, matching the acoustic impedances assures that maximum acoustic energy is transmitted to the core 110 of the fiber 102. In a preferred embodiment of the phase modulator 88 the layer of piezoelectric material 190 comprises crystalline lithium niobate (LiNbO3), with a thickness on the order of 100 microns and aluminum electrodes having thicknesses on the order of 2000 Angstroms.

Thus, the design of the device may depend predominantly upon the acoustic impedance of the layer 190. For clarity of illustration, the relative dimensions of Figures 13 and 14 are distorted. The interaction of the propagating acoustic signal with the optical signal guided by the fiber segment 102 rearranges the dipole moments within the material of the fiber core 110 and causes a predictable phase shift in the transmitted signal. The magnitude of the phase shift is primarily a function of the power delivered by the source 72 and the length of the fiber segment 102 adjacent the transducer 183.

The acoustic signal launched by the transducer 183 causes a predetermined change, $\Delta n$, in the refractive index of the fiber medium. This change in the refractive index is a direct function of the amplitude of an acoustic strain wave generated within the fiber. The acoustic signal power, P, is a function of the power delivered by a voltage source (not shown). Since there is a small amount of insertion loss, the acoustic wave power is somewhat less than the power input.

The controlled vibration of the piezoelectric transducer 183 adjacent the optical fiber segment 102 launches an acoustic wave into the fiber. The phase modulator 88 produces a phase shift in light guided by the fiber 102.

### E. Frequency Shifters

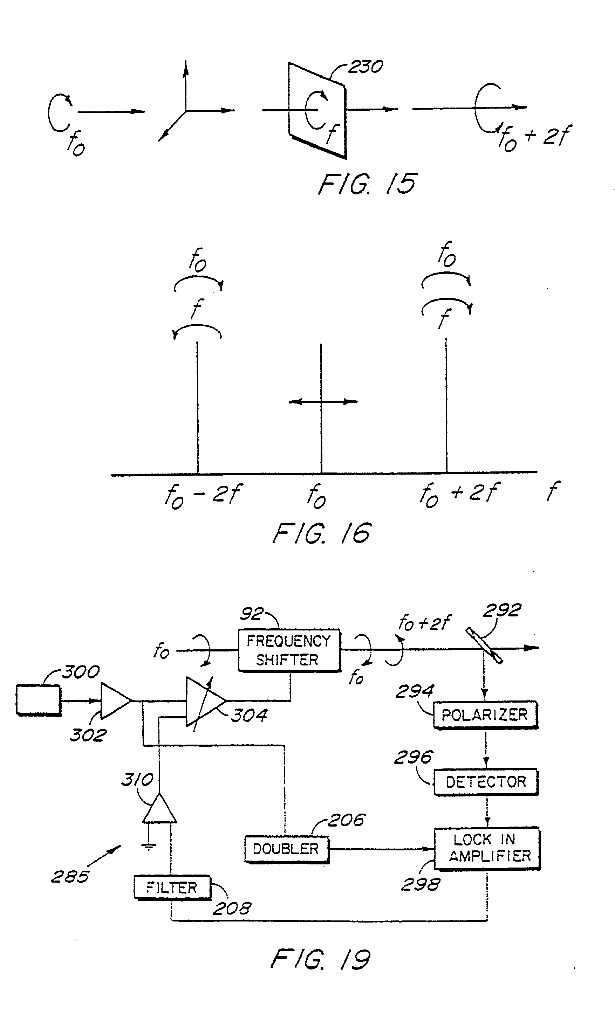

Figure 15 represents circularly polarized input light incident upon a half-wave plate 230 that is rotating at an angular velocity f. The input wave is shown to have a frequency $f_o$. The signal is traveling in the positive z-direction and has polarization vectors in the x- and y-directions that are of equal magnitude and 90 degrees out of phase. Therefore, the polarization vector appears to rotate at angular velocity $f_o$ about the z-axis in a clockwise direction when viewed looking toward the direction of propagation. The half-wave plate 230 rotates in the same direction as the polarization vector so that the output signal is frequency shifted from the input frequency $f_o$ to-have a frequency of $f_o + 2f$.

Figure 16 graphically represents the possible frequency outputs from the frequency shifter 91 (Fig. 12) when it is operated as a single-side-band-suppressed-carrier phase shifter. If the input frequency is $f_o$, then rotating the half-wave plate at frequency f in the direction of polarization of the input signal produces an output of $f_o + 2f$. Rotating the half-wave plate 230 at the frequency f opposite in direction to the polarization of the circularly polarized input signal produces an output frequency of $f_o - 2f$. Controlling the rotational frequency f permits the output frequency of the half-wave plate to have a range of $[f_o (+/-) 2f_{max}]$ where $f_{max}$ is the maximum rotational frequency of the half-wave plate 230.

The amplitudes of the outputs of the frequency shifter 91 is

$$\phi(t) = A \exp[i(f_o+2f)t] + B \exp[if_o t]. \qquad (5)$$

The intensity of an output signal is the square of the amplitude and is given by

$$I \quad = \quad |\phi(t)|^2 \qquad\qquad (6)$$
$$= \quad A^2 + B^2 + 2AB \cos(2ft). \qquad (7)$$

The coefficient A is ordinarily much larger than B so that $B^2$ is negligible.

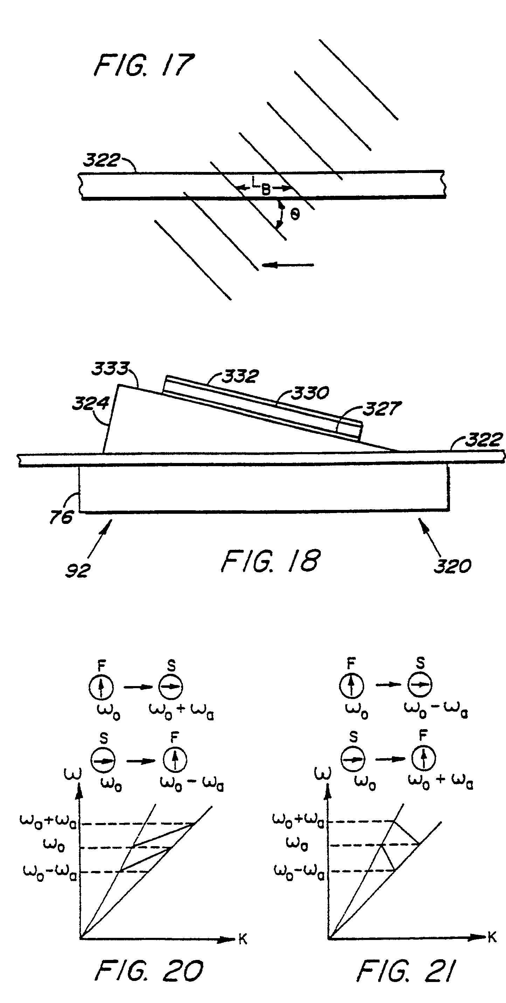

An alternate frequency shifter that may be used in the fiber optic gyroscope 70 is shown in Figure 18. The frequency shifter 92 may include a length 322 of the optical fiber 74 retained between a block 324, formed of a material such as fused quartz, and the substrate 76. A transducer 330 formed of a PZT plate mounted between two metallic Cr-Au layers 327 and 332, for example, is mounted to the block 324. The transducer 330 may be driven by a suitable oscillator (not shown) to launch an acoustic signal at an angle $\ominus$ into the fiber.

The fiber 74 is a single mode fiber that supports two orthogonally polarized signals of the single propagation mode. There are two polarizations because the fiber is birefringent and has different refractive indices for different directions of the electric field in the fiber. The two polarizations are usually uncoupled so that there is no energy transfer from one signal to the other. A spatially periodic stress pattern imposed on the fiber induces coupling between the two differently polarized signals, causing power exchange between them. The power transfer is cumulative only if the spatial period of the stress pattern equals the beat length of the fiber. Referring to Figure 17, the beat length of the optical fiber is $L_B = \lambda/\Delta n$, where $\Delta n$ is the difference in the refractive indices for the two polarizations and $\lambda$ is the optical wavelength. It has been found that a stress pattern is most effective in causing coupling of the two polarizations when the stress is directed at 45 degrees to the principal axes of birefringence..

The transducer 330 forms a traveling acoustic signal which causes a moving stress pattern in the fiber segment 322. Because of the motion of the coupling region, the moving stress pattern along the fiber shifts the frequency of the signal, coupled from one polarization to the other, by an amount equal to the frequency of the moving stress pattern. For convenience, one polarization of the signals is called "slow;" and the other polarization is called "fast." The velocity of an optical signal in a dielectric medium is the free space velocity of light divided by the refractive index of dielectric, or $v = c/n$. Therefore, it may be seen that in a birefringent medium the polarization for which the refractive index is the greater is the slow signal; and the polarization for which the refractive index is smaller is the fast signal.

In Figure 17, a plane acoustic wave front of wavelength $\lambda_a$ is incident upon the fiber segment 322. Phase matching occurs when the component of the beat length $L_B$ in the direction of propagation of the acoustic signal equals the acoustic signal wavelength. Therefore, it is seen that $L_B$

$$\ominus = \lambda_a.$$

Using a well-known relation between signal velocity, frequency and wavelength to eliminate the acoustic wavelength from the preceding equation gives the acoustic frequency as

$$f = v/(L_B \sin \ominus),$$

where v is the acoustic signal velocity in the fiber.

The specific nature of the interaction between the acoustic signal and the two optical polarizations propagated by the fiber can be demonstrated using frequency-wave number diagrams.

Referring to Figure 20, if the acoustic signal travels in the same direction as the light in the fiber 74, light polarized in the fast mode and having frequency $\omega_o$ couples to the slow mode with the resulting signalsignal having a frequency $\omega_o + \omega_a$, where $\omega_a$ is the acoustic signal frequency. Light propagating in the slow mode couples to the fast mode and shifts in frequency to $\omega_o - \omega_a$.

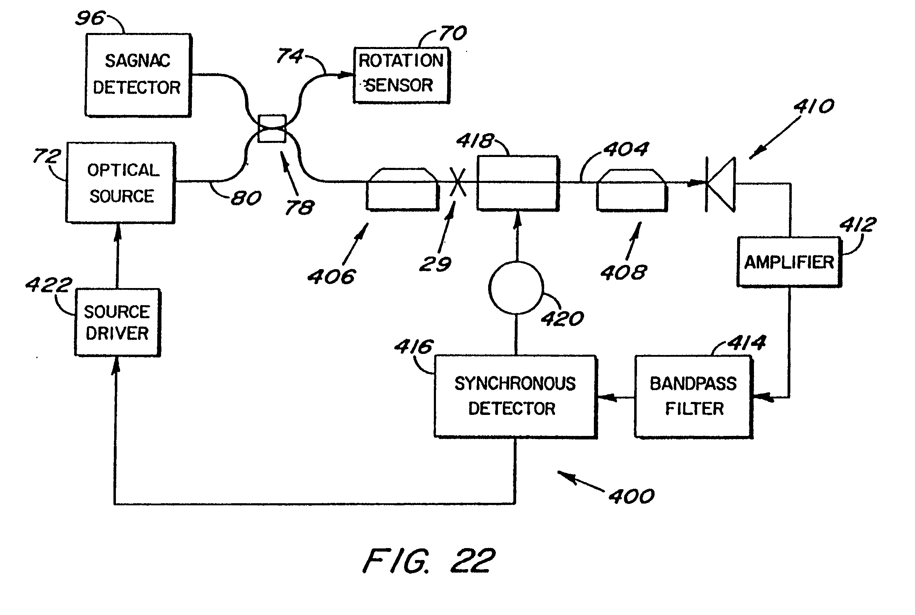

As shown in Figure 21, if the acoustic signal propagates in a direction opposite to that of the light in the fiber 74, the frequency shifting characteristics of the system reverse. Specifically, light propagating in the fast mode couples to the slow mode with a change in frequency to $\omega_o - \omega_a$; and light propagating in the slow mode couples to the fast mode with a change in frequency to $\omega_o + \omega_a$.

Therefore, if only light of a single polarization impinges upon the segment of the fiber 74 having the periodic moving stress pattern therein, the frequency shifter 320 is a single side band frequency shifter. In practice, because of the finite extinction ratio of the polarizers included in the gyroscope and other factors.the selected polarization may have small amounts of the carrier frequency and the sideband having the opposite frequency shift.

Figure 19 illustrates a feedback system 285 for controlling the output frequency of the frequency shifter 92 to minimize the undesired carrier frequency component.

A voltage source 300 supplies a voltage V to a voltage-controlled-oscillator 302, which produces an oscillatory voltage having a frequency f that is a function of V. The output of the voltage-controlled-oscillator 302 is amplified by a variable gain amplifier 304 to provide a control signal to the frequency shifter 92 and to a doubler 206. The doubler 206 provides an output signal having a frequency of 2f to the lock-in amplifier, thereby causing the lock-in amplifier 298 to amplify only signals having frequency 2f, which is the frequency of the third term of Equation (7).

The frequency shifter 92 has incident thereon an optical signal frequency of $f_0$ from the light source 72. The incident signal has a clockwise circular polarization as seen looking from the light source 90 toward the frequency shifter 92. The amplitude of the output from the frequency shifter 92 is given by Equation (5). The term B exp[i($f_0$t)] represents an undesired spectrum of the carrier signal that is channeled through the frequency shifter 92. The output signal of the frequency shifter 92 is incident upon a signal splitter 292, which may, for example, transmit approximately 10% of the incident light into a polarizer 294.

The unwanted portion of the output signal has the same polarization as the input signal, and the desired portion of the output intensity has the opposite polarization. The polarizer 294 transmits only a portion of each optical signal. The output of the polarizer 294 is incident upon a photodetector 296, which produces an error signal indicative of the third term of equation (7).

The error signal is delivered to a lock-in amplifier 298. The output of the lock-in amplifier 298 is a voltage proportional to 2AB, the coefficients of the third term, 2AB cos (2ft) of equation (7). The output of the lock-in amplifier 298 travels through a filter 208 to a comparator 310 that has one grounded input. If the voltage proportional to 2AB, that is delivered to the comparator 310, is not zero, the comparator 310 produces an output voltage that is delivered to the gain control of the variable gain amplifier 304 as a negative feedback signal to either increase or decrease the voltage of the control signal delivered to the frequency shifter 92. The negative feedback signal causes a reduction in the coefficient B, which reduces the error signal and causes the output of the frequency shifter 92 to have the desired frequency.

### F. Source Wavelength Stablilization

Stabilization of the scale factor is critical to the performance of a high accuracy fiber optic gyroscope. The scale factor, which relates the angular rotation rate of the sensor to the Sagnac phase shift, is sensitive to changes in the length of the fiber and to variations on the operation wavelength of the source. In superluminescent diodes (SLDs), changes in the ambient temperature and in the drive current cause thermal fluctuations in the active region which produce variations in the emission wavelength. Typically, the temperature dependence of the SLD emission wavelength is about 0.2 nanometers per degree Centigrade. To obtain the required wavelength stability by thermal means alone would require the temperature of the SLD to be held constant to a few milli-degrees. The need for stringent temperature stability is obviated by using a reference interferometer to monitor the emission spectrum of the SLD. Changes in the emission spectrum generate an error signal which is processed and fed back to the diode to hold the wavelength constant.

Lasers, with their long coherence length, are readily stabilized by using a temperature stabilized scanning Fabry-Perot interferometer to lock the cavity length. However, the large spectral bandwidth of a SLD precludes the use of an optical spectrum analyzer to monitor the emission wavelength of the diode. To analyze the typical 10 nano-meter emission bandwidth of a SLD the mirrors of a Fabry-Perot interferometer would be spaced apart an impractical approximately 1 micron.

A practical wavelength measurement apparatus should be designed within the volume budget of the gyro and be inside the gyro housing. The wavelength stabilization device should be only a few cubic centimeters in volume.

Optical sensing systems may use a wideband source such as a superluminescent diode 72 or a narrower source (not shown) such as a single or multimode semiconductor diode laser as light sources. The source needs frequency stabilization to be suitable for a Sagnac ring fiber optics rotation sensor.

There are at least three groups of laser diodes, classified by structure. Simple diode lasers are called homostructure lasers because they are made of a single semiconductor material. A typical single heterostructure semiconductor laser includes an additional layer of aluminum gallium arsenide, in which some of the gallium atoms in the gallium arsenide have been replaced by aluminum atoms. A typical double heterostructure semiconductor laser includes three layers of gallium arsenide separated by two layers of aluminum gallium arsenide. In Figure 22, an optical source controller system 400 for controlling the wavelength delivered by the optical signal source 72 includes an optical coupler 78, a length of a polarization-maintaining fiber 404, a polarizer 406, an analyzer 408, a photodetector 410, an amplifier 412, a band pass filter 414, a synchronous detector 416, a phase modulator 418, a driver oscillator 420 and a source driver 422.

Part of the light from the optical source 72 couples into the fiber 80. The optical signal then travels through the polarizer 406, which transmits a signal that is linearly polarized at an angle of 45 degrees to the principal axes of the fiber 404. The fiber 404 is a polarization-maintaining fiber that may be formed by a variety of techniques described subsequently. The polarization-maintaining fiber 404 has refractive indices that differ significantly for different polarizations. Since the light delivered to the fiber 404 has polarization components along both of the fiber axes, both of these polarizations propagate in the fiber 404 without mixing.

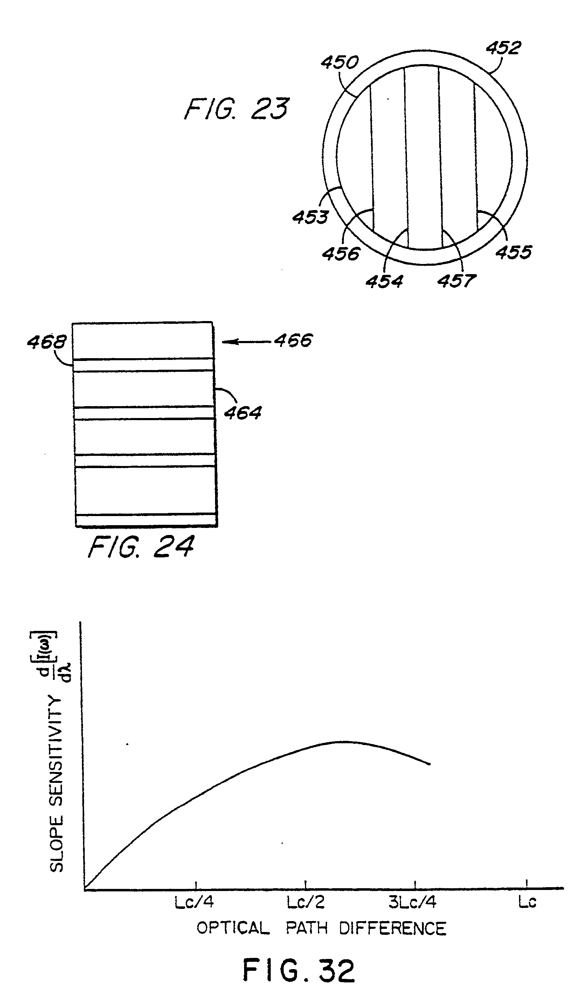

Because of the superposition of the orthogonal fast and slow waves, the fiber 404 converts the delivered linearly polarized signal into an elliptically polarized signal. One type of polarization-maintaining fiber (Figure 23) has a layered core 450 and a surrounding cladding 452. The core 450 has different refractive indices for signals of different polarizations so that the propagation constants of the core are polarization-dependent. The cladding 452 has a refractive index that is less than any of the core refractive indices. Light incident upon an interface between two dissimilar dielectrics from the material having the greater refractive index is internally reflected if the angle of incidence is less than a critical angle. Therefore, the polarization-maintaining fiber guides light of both polarizations. Since the propagation constants of the core are different, or non-degenerate, for the two polarizations, energy does not readily couple between them. Light propagated by the polarization-maintaining fiber 80 experiences no change in polarization.

A core having birefringent properties can be synthesized by properly choosing materials for the layers to have particular refractive indices and thicknesses.

Referring to Figure 23, the core 450 is comprised of layers 453-455 of a first material and layers 456 and 457 of a second material having an index of refraction different from the first material. The core 450 may comprise many layers of the two materials, but only the five layers 453-457 are shown for convenience of illustration and explanation.

As in most optical fibers, the core 450 is shown to be circular in cross section. The materials comprising the core 450 and cladding 452 are chosen such that the core indices of refraction for polarization along the z-axis and the y-axis are greater than the index of the cladding 452. Therefore, a signal polarized along the z-direction delivered to the form birefringent fiber 80 remains polarized in the z-direction.

Unlike ordinary optical fibers, the form birefringent single mode fiber 404 maintains the polarization state of a signal propagating therein. In the fiber 404 the difference between the refractive indices for the two polarizations is sufficiently large that there is a substantial difference between the propagation constants of signals having the two orthogonal polarizations. Under ordinary conditions, the difference between the propagation constants eliminates the degeneracy between the polarization states and prevents signals of one polarization from coupling to the other polarization. Coupling of energy between signals requires that the signals have essentially the same velocity. If the velocities are different, there is no appreciable coupling between the two states.

In Figure 24, the polarization maintaining fiber 404 of Figure 22, may be formed from a stack 466 of alternating layers of materials 464 and 468 having different refractive indices. The stack 466 is heated to form an essentially monolithic block. The block is then drawn through a succession of dies, or otherwise stretched by known methods, to reduce its dimensions to values suitable for use as the core 450. Before drawing, to produce a core having a circular cross section, the block may be ground to form a cylinder. A cladding having a refractive index less than both refractive indices of the core 450 may be added by standard techniques, such as fusing bulk silicon dioxide, $SiO_2$, onto the core, collapsing $SiO_2$ tubing onto the core, or by reactive deposition of $SiO_2$ from a gaseous mixture.

$GeO_2$ may be used as the high index component and $SiO_2$ as the low index component in the stack 466. Because of their low loss and physical compatibility, both silica and germania are used. Combined inhomogeneously with proper fractional thickness they form the core 450, with both $n_z$ and $n_y$ being large enough to be clad by fused silica.

Although, well established optical fabrication techniques can be used to fabricate the $SiO_2$ plates from pure bulk $SiO_2$, the $GeO_2$ component may be too thin to be formed by mechanical fabrication techniques. The $GeO_2$ layer may be formed by sputtering a $GeO_2$ film onto an $SiO_2$ substrate or by coating the $SiO_2$ with a layer of Ge and oxidizing it to $GeO_2$ in a tube furnace.

Other types of high birefringence fiber suitable for use as the polarization maintaining fiber 404 (Fig. 22) are disclosed in the following United States Patents:

Patent 4,549,781 which issued October 29, 1985 to Bhagavatula et al. for "Polarization-Retaining Single-Mode Optical Waveguide";

Patent 4,529,426 which issued July 16, 1985 to Pleibel et al. for "Method of Fabricating High Birefringence Fibers";

Patent 4,465,336 which issued August 14, 1984 to Huber et al. for "Waveguide and Method of Manufacturing Same"; and

Patent 4,561,871 which issued December 31, 1985 to Berkey for "Method of Making Polarization Preserving Optical Fiber".

If the reference signal that drives the piezoelectric transducers is sinusoidal with a modulation frequency $w_p$, called the squeezer frequency, the time delay $\tau$ between the fast and slow signals may be written as

$$\tau = \tau_0 + \Delta\tau \cos \omega_p t. \quad (8)$$

If $\omega\tau = 2\Pi m$, where m is an integer, then the time delay is a maximum or a minimum. An excursion in the time delay changes the output intensity. Referring to Figure 22, after traveling through the fiber 80 and the elements 78, 406, 29, and phase modulator 418, the signal is incident upon the analyzer 408. The optical signal input to the analyzer 408 may be written as I = (1 + cos $\omega$ ), where $\omega$ is the optical frequency and $\tau$ is the time delay between the fast and slow polarizations over the length of the fiber 80. The phase modulator 418 produces modulation in the relative phase of the fast and slow signals. The driver oscillator 420 is an alternating current source having a frequency $\omega_p$ to drive the phase modulator 418.

When the phase modulator 418 operates, the electrical current output from the detector may be written as

$$i \sim (1 + \cos[\ \omega\gamma + \phi_p \cos \omega t]). \quad (9)$$

The output signal from the analyzer 408 is delivered through the diode 410, and the amplifier 412 to the bandpass filter 414. The filter 414 delivers squeezer frequency signals, $\omega_p$, to a synchronous detector 416, or a lock-in amplifier (not shown), which receives its reference signal from the squeezer driver 420. After demodulation, the signal is

$$s_1 \sim \sin \omega\gamma \ J_1(\phi_p). \quad (10)$$

where $J_1$ is the first order Bessel function of the first kind. This signal is used to servo the source frequency to force $S_1$ toward zero.

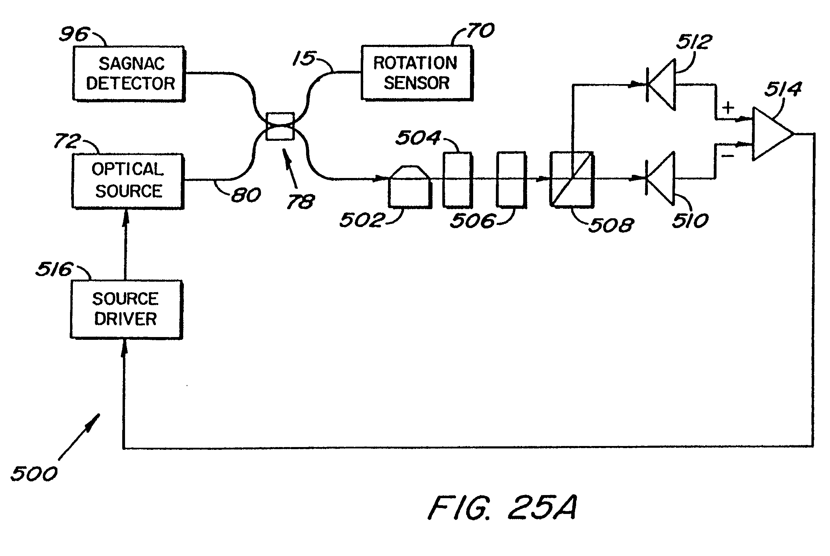

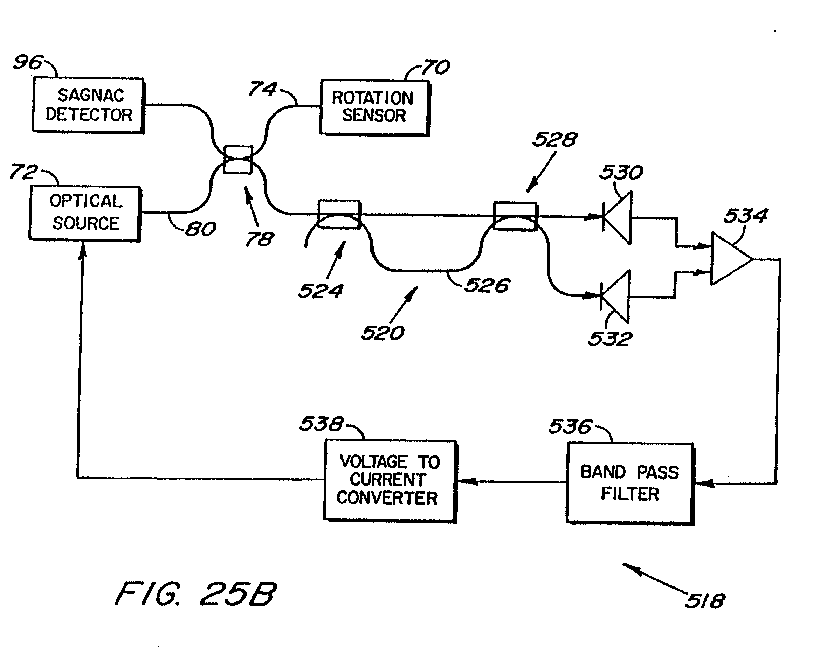

Figures 25A and 25B illustrate a different system 500 for stabilizing the wavelength of the source 72. In Figure 25A, light from the source 72 is delivered to the fiber 80, through the coupler 78, to a polarizer 502. The polarizer 502 may be any type of polarizing device, but is preferably similar to the reciprocity polarizer 86 of Figure 12. The axis of the polarizer 502 is aligned at a 45 degree angle to the direction of polarization of its received light. The light is delivered through a first birefringent crystal 504 that has a 50/50 split in energy between its fast and slow signals. The light travels through a second birefringent crystal 506 that also has a 50/50 split in energy between its fast and slow signals. The output signals of the crystal 506 are elliptically polarized optical signals. The signals from crystal 506 are delivered to a polarization wavesignal splitter 508, which has output intensities

$$Io(1 + \cos \phi)$$

and

$$Io(1 - \cos \phi),$$

$\phi$ the birefringent phase shift generated by the crystals 504 and 506. At the correct source frequency, the intensities of the wavesignals delivered from the polarizing signal splitter 508 are equal

$$I_0(1 + \cos \phi) = I_0(1 - \cos \phi). \quad (11)$$

The amplitudes or intensities of the two signals from the polarizing signal splitter 508 are made to be equal by servoing the drive current of the source 72 with a signal indicative of the difference of the two intensities. The signal having intensity,

$$I_0(1 + \cos \phi),$$

is incident upon a detector 510, and the other signal is incident upon a detector 512. The detectors 510 and 512 form signals $i_1$ and $i_2$, respectively, that are indicative of the intensities of the signals incident thereon. The signals $i_1$ and $i_2$ are delivered to a difference amplifier 514, to form a signal which is a measure of the difference of the signals. The amplified difference signal is delivered as a control signal to a current source 516, which supplies a controlled injection current to the source 72 to adjust the output signallength to the desired value. The frequency of the light delivered by the source 72 is proportional to the injection current that the SLD source receives from the current source 516.

Figure 25B illustrates still another modified light source control system 518. Light from the source 72, delivered into the fiber 80, is further delivered through coupler 78 to a Mach-Zehnder interferometer 520. The Mach-Zehnder interferometer 520 comprises a coupler 524, the fiber 80, an optical fiber 526 and a coupler 528. Any type of two signal interferometer such as a Michelson interferometer (not shown) could be used instead of the Mach-Zehnder interferometer 520.

The regions of the fibers 80 and 526 between the couplers 524 and 528 have an optical path difference of $c\tau$, where c is the velocity of light and $\tau$ is the difference in transit times of light between the couplers 524 and 528 in the fibers 80 and 526. For the interferometer 520 to provide a stable reference, the optical path difference should be insensitive to changes in temperature.

The output terminals of the coupler 528 are connected to detectors 530 and 532, which form electrical signals $i_1$ and $i_2$, respectively, which are a measure of the intensities of their sensed optical signals.. The signals $i_1$ and $i_2$ are sent to a differential amplifier 534, and the amplified difference signal is sent through a low pass filter 536. The output of the filter 536 is designated as $V_{LP}$. The signal $V_{LP}$ is delivered to a voltage-to-current generator 538, to form a signal $i_F = \alpha V_{LP}$. The current $i_F$ is the servo current that controls the injection current applied to the SLD light source 72.

Due to superposition of the orthogonally polarized fast and slow signals, the fiber 80 converts the linearly polarized signal input into an elliptically polarized signal. In the following examples, the current outputs of the detectors 530 and 532 are

$$i_1 = \{K_1\textstyle\int I_o(\omega)[1 - \cos \omega\tau]d\omega\}/\{\int I_o(\omega)d\omega\} \quad (12)$$
$$i_2 = \{K_2\textstyle\int I_o(\omega)[1 + \cos \omega\tau]d\omega\}/\{\int I_o(\omega)d\omega\} \quad (13)$$

For a balanced detector configuration, the constants $K_1$ and $K_2$ are expressed in amperes and should be equal. The output of the difference amplifier is

$$V_G = G(i_1 - i_2) = G(K_2-K_1) + \{G(K_2 + K_1)\textstyle\int I_o(\omega) \cos \omega\tau \, d\omega/\{\int I_o(\omega)d\omega\}. \quad (14)$$

For the ideal case of the balanced configuration in which $K_1 = K_2$ and where the spectral width of the source approaches zero, the output $V_G$ of the difference amplifier is zero when

$$\omega_o\tau = (N + 1/2)\Pi, N = 0, 1, 2 \quad (15)$$

Using Equation (6), the interferometer output phase shift is

$$\omega\tau = \omega_o\tau + \varepsilon\tau - s\tau, \quad (16)$$

where $\varepsilon\tau$ is the interferometer phase shift referenced to the zero output operating point $\omega_o\tau$ and $s\tau$ is the feedback (servo) phase shift. With $\varepsilon$ as the new frequency variable, Equation (4) becomes

$$V_G = G(K_2-K_1) + G(K_2 + K_1) = \{\textstyle\int I_o(\varepsilon) \cos[(N + 1/2)\Pi + \varepsilon\tau - s\tau]d\varepsilon\}/\{\int I_o(\varepsilon)d\varepsilon\} \quad (17)$$
$$= G(K_2-K_1) + G(K_2 + K_1)(-1)^N[A(\tau)\sin s\tau - B(\tau) \cos s\tau]. \quad (18)$$

were

$$A(\tau) = \{\textstyle\int I_o(\varepsilon) \cos \varepsilon\tau \, d\varepsilon\}/\{\int I_o(\varepsilon)d\varepsilon\} \quad (19)$$

and

$$B(\tau) = \{\textstyle\int I_o(\varepsilon) \sin \varepsilon\tau \, d\varepsilon\}/\{\int I_o(\varepsilon)d\varepsilon\} \quad (20)$$

Another form of Equation (8) is

$$VG = G(K_2-K_1) + G(K_2 + K_1) (-1)^N[A^2(\tau) + B^2(\tau)]^{\frac{1}{2}} * \sin[s\tau - \tan^{-1}(B(\tau)/a(\tau)]. \quad (21)$$

The expression $[A^2(\tau)+B^2(\tau)]^{\frac{1}{2}}$ is a visibility function of the optical path difference of the two legs of the interferometer and source spectral distribution; $\tan^{-1}[B(\tau)/a(\tau)]$ is an input phase shift referenced to the starting point given in Equation (6); and $s\tau$ is the feedback phase shift. The variables $V_\tau$, $\Theta_i$, and $\Theta_f$ are defined as follows:

$$V_\gamma = [A^2(\gamma)+B^2(\gamma)]^{1/2} \quad (22)$$
$$\Theta_i = \tan^{-1}[(B(\gamma)/A(\gamma)] \quad (23)$$
$$= \tan^{-1}\{[\textstyle\int I_o(\varepsilon)\sin \varepsilon\gamma \, d\varepsilon]/[\int I_o(\varepsilon)\cos \varepsilon\gamma \, d\varepsilon]\} \quad (24)$$
$$\Theta_f = s\gamma \quad (25)$$

The expression in Equations (22), (23), (24) and (25) are all functions of time. Substituting them into Equation (21) gives

$$V_G(t) = G(K_2 - K_1) +$$
$$+ G(K_2 + K_1)(-1)^N V_\gamma(t) \sin[\Theta_f(t) - \Theta_i(t)]. \quad (26)$$

The input to the low pass filter 536 of Figure 25B is $V_G(t)$, and the output across the capacitor C is $V_{LP}(t)$. The node equation connecting both voltages is

$$(1/R)[V_G(t) - V_{LP}(t)] = C \, d/dt[V_{LP}(t)]. \quad (27)$$

The voltage $V_{LP}$ is the input to the voltage-to-current converter 538 which produces an output current

$$i_f = -\alpha V_{LP}. \quad (28)$$

In terms of the feedback current, the voltage output of difference amplifier 534 is

$$V_G(t) = -[RC/\alpha]d/dt[i_f(t)] - [1/\alpha]i_f(t). \quad (29)$$

The feedback current produces a feedback phase shift from the source phase due to the servo change in source frequency. From Equations (24) and (25) this phase shift is

$$\Theta_f(t) = s(t) = \beta i_f(t), \quad (30)$$

and the difference amplifier output is

$$V_G(t) = -[RC/(\alpha\beta)]d/dt[\Theta_f(t)] - (1/\alpha\beta)\Theta_f(t) \quad (31)$$

The complete servo equation relating the input and feedback phase shift is obtained from Equations (24) and (30).

$$d/dt\,\Theta_f(t) + (1/RC)\Theta_f(t) =$$
$$= (1/RC)(\alpha\beta G)[(K_2 - K_1) +$$
$$+ G(K_2 + K_1)(-1)^N V_\gamma(t) \sin(\Theta_f(t) - \Theta_i(t)]. \quad (32)$$

Equation (32) is a non-linear differential equation. Some approximations are made to make it more tractable. The visibility function $V_\tau$ is usually very weakly influenced by changes in source spectral range and may therefore be considered to be constant. If the servo tracks well, the feedback phase shift minus the input phase shift,

$$\Theta_f - \Theta_i,$$

is small enough that

$$\sin(\Theta_f(t) - \Theta_i(t)) = (\Theta_f(t) - \Theta_i(t)).$$

The $(-1)^N$ term indicates the polarity of the fringe order with respect to the servo feedback. Choosing the proper polarity of $\alpha$ or G eliminates uncertainty due to that term. The linearized form of Equation (32) is

$$d/dt\,\Theta_f(t) + [(1+X)/T]\Theta_f(t) =$$
$$= [X/T][\Theta_i(t) - [1/V_t][(K_2 - K_1)/(K_2 + K_1)]] \quad (33)$$

where

$$\Theta_i(t) = \tan^{-1}\{[\int I_0(\mathcal{E})\sin\mathcal{E}\gamma \, d\mathcal{E}]*$$
$$*[\int I_0(\mathcal{E})\cos\mathcal{E}\gamma \, d\mathcal{E}]^{-1}\} \tag{34}$$

$$\Theta_f(t) = s(t)\gamma \tag{35}$$

$$T = RC \tag{36}$$

$$X = \alpha\beta \, G(K_2 + K_1)V_\gamma. \tag{37}$$

The driving term in Equation (33) is obtained for a constant value $\Theta_i(t)$.

The steady state solution of Equation (33) is obtained for a constant value $\Theta_i(t)$.

$$\Theta_f = [X/(1 + X)][\Theta_i(t) - \{(K_2 - K_1)/[(K_2 + K_1)V_\gamma]\}] \tag{38}$$

As the overall gain X becomes large, the feedback phase shift and the input phase shift minus an offset approach one another such that the difference between them becomes very small and the servo tracks closely. Another solution to Equation 33 is obtained for a sinusoidal input in which

$$\Theta_i(t) = \phi_0 \sin\Omega t. \tag{39}$$

The phase $\Theta_f$ is

$$\Theta_f(t) = [(\Omega t)^2 + (1 + X)^2]^{1/2} *$$
$$* \sin\{\Omega t - \tan^{-1}[\Omega t/(1+X)] -$$
$$-X(K_2-K_1)/[V_\gamma(1+X)(K_2+K_1)]\} \tag{40}$$

For high frequencies $\Omega t$ is much larger than the overall gain X, and the AC feedback phase correction approaches zero. For low frequencies, X is much larger than $\Omega t$, and an expression $\Theta_f'(t)$ similar to that of Equation (38) is obtained.

$$\Theta_f(t) \approx [X/(1+X)]\{\phi_c \sin\Omega(t-T/X) - (K_2-K_1)/[V_\gamma(K_2+K_1)]\} \tag{41}$$

It should be noted

$$\Theta_f(t) - \Theta_i(t)$$

approaches zero as the overall gain X becomes much larger than one.

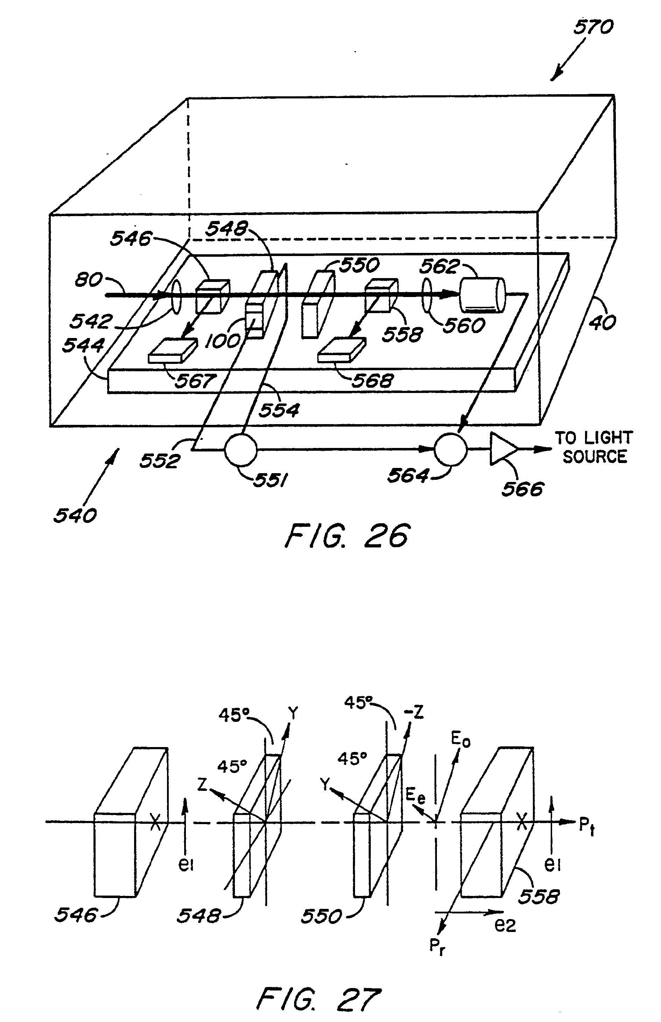

In Figures 26 and 27, a thermally compensated reference interferometer 540 for stabilizing an optical source 72(Fig. 22) has the following items mounted upon a baseplate 544. A lens 542 receives light from an optical fiber 80 which receives its light from the source 72. The lens 542 focuses the signal onto a polarizing beamsplitter 546 which is preferably a bulk optics device for polarizing an optical input at 45 degrees to its optic axis. The optic axis is conveniently defined as an axis collinear with the optical signal received from the fiber 80.

Light transmitted through the polarizing beamsplitter 546 is delivered to a first crystal 548. Signals transmitted through the crystal 548 are delivered to a second crystal 550 which is mounted near the crystal 548. Although other materials may be used, the crystal 548 is preferably formed of lithium niobate, and the crystal 550 is formed of lithium tantalate. Both of these crystals 548 and 550 are birefringent electro-optically active materials.

Although several other pairs of crystal materials could be used, in the reference interferometer 540, electro-optic crystals are preferred for phase-sensitive detection. To modulate the phase of the optical signal transmitted through electro-optic crystal 548, an alternating voltage is delivered from an oscillator 551, through leads 552 and 554.

Light transmitted through the crystal 550 is delivered to a second polarizing beamsplitter 558. The polarizing beamsplitter 558 polarizes the input light along a line at 45 degrees to its optic axis. Light transmitted through the polarizing beamsplitter 558 is delivered through a lens 560 and thence onto a detector 562.

A pair of absorbers 567 and 568 receive the signal rejected by the polarizers 546 and 558, respectively, and prevent the rejected light from affecting the signal delivered to the detector 562.

The baseplate 544 and all the components mounted thereon are preferably enclosed in a hermetically sealed container 570.

For an optical signal polarized at 45 degrees to the optic axis of the lithium niobate crystal 548 and lithium tantalate crystal 550, the phase difference between the two orthogonally polarized components is

$$Y = 2\Pi S/\lambda \quad (42)$$

where $\lambda$ is the wavelength of the source signal. The optical pathlength difference, S, between the two differently polarized signals propagating through the crystals, is

$$S = L_1 B_1 - L_2 B_2 \quad (43)$$

where $L_1$, $L_2$ and $B_1$, $B_2$ are the lengths and birefringences of crystals 548 and 550, respectively.

Referring to Figure 27, the electric field for a quasi-mono-chromatic optical signal, $E_i$, polarized parallel to $e_1$ and incident on the birefringent crystal 548 is

$$E_i(x,t) = e_1 E_o \cos (Kx - t) \quad (47)$$

where $K = 2\Pi/\lambda$ is the wave number, $\omega$ is the angular frequency of the signal in radians per second, and x and t are the displacement and time coordinates, respectively. The optic axes of the two crystals 548 and 550 are aligned parallel to each other and at 45 degrees to the polarization of the incident signal. The signal exiting the crystal 550 and directed to the lens 560 includes two orthogonally polarized components shifted in phase relative to each other. The field distributions for the ordinary and the extraordinary polarized signals are

$$E_o = E \cos (k_{o1} L_1 + k_{o2} L_2 - \omega t) \quad (48)$$

and

$$E_e = E \cos (k_{o1} L_1 + k_{o2} L_2 - \omega t) \quad (49)$$

respectively.

$L_1$ and $L_2$ are the lengths of the crystals 548 and 550, respectively, and $k_o$ and $k_o$ are the signal numbers of the ordinary and extraordinary signals in the crystals. The polarizing beamsplitter 558 is oriented so that the polarization of the transmitted signal is parallel to $e_1$. Time-averaged transmitted and reflected power are respectively given by

$$P_t = [1/2]\{P_o[1 + V\cos (y)]\} \quad (50)$$

and

$$P_r = [1/2]\{P_o[1 - V\cos (y)]\} \quad (51)$$

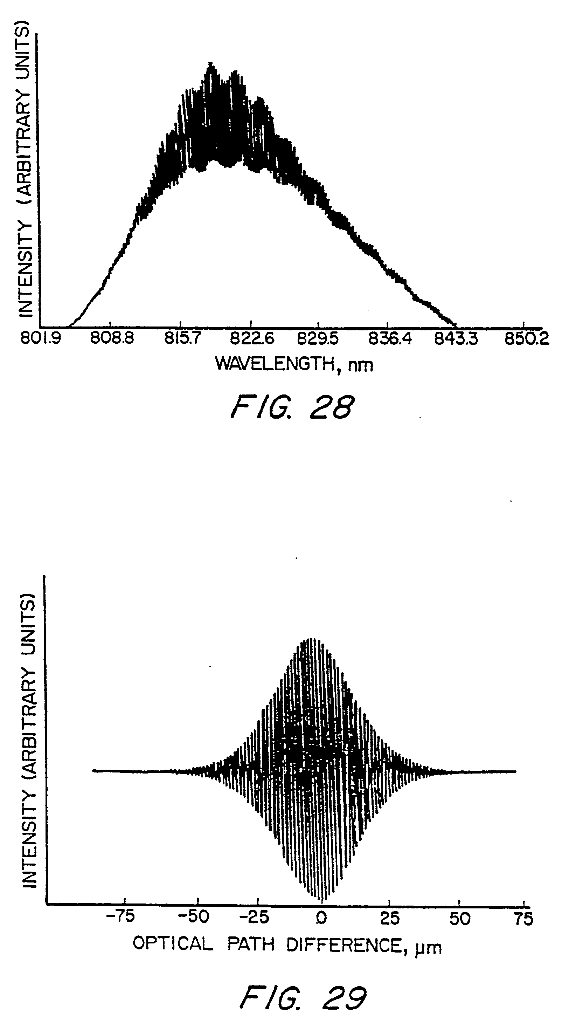

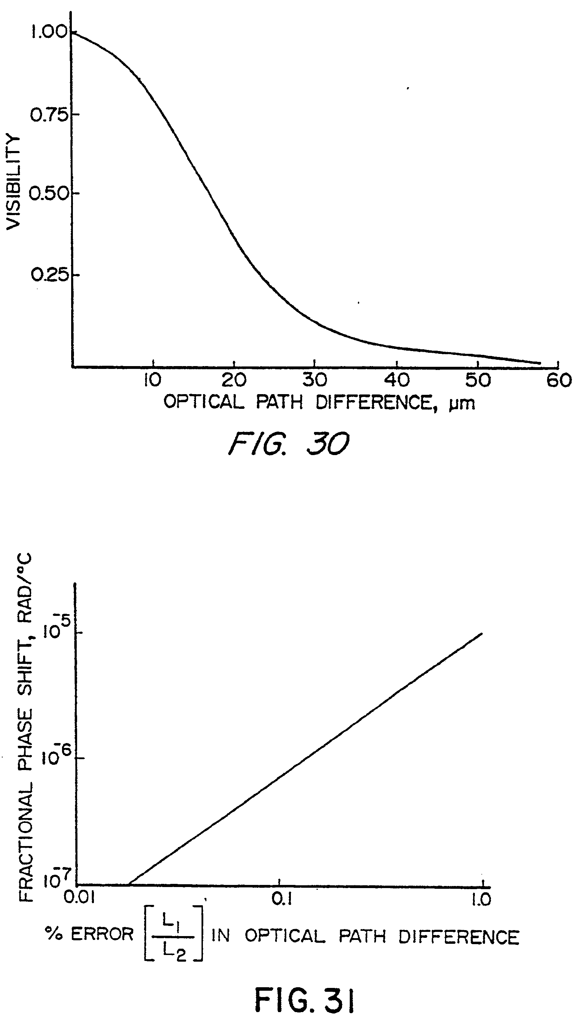

$P_o$ is the square of the field amplitude, $E_o$. For a broad bandwidth source such as an SLD, the cosine functions in Equations (50) and (51) are multiplied by the fringe visibility function, V. As shown in Figure 30, for an SLD with a 10 nano-meters spectral bandwidth, the visibility function monotonically decreases from a maximum value of one at zero optical path difference to zero at approximately 60 microns. By making the optical path difference of the interferometer an integral number of wavelengths, the interferometer 540 transmits maximum power, $P_t$ (from Equation 50), and makes the reflected power, $P_r$, very small. For an SLD with a center signallength of 820 nm as shown in Figure 28, the interferometer 540 has an optical path difference of 8.2 microns.

For a thermally insensitive reference interferometer, the temperature derivative of the phase difference, dY/dT must be zero.

Differentiating Equation (42) with respect to temperature and setting the result equal to zero gives

$$L_1/L_2 = K_2 B_2/K_1 B_1 \quad (44)$$

where

$$K_i = (1/B_i) dB_i/dT + (1/L_i) dL_i/dT \quad (45)$$

is the sum of the normalized rate of change of birefringence with temperature and the thermal expansion coefficient of each crystal, where $i = 1, 2$.

For good fringe visibility in the interferometer 540 the optical path difference between the two differently polarized signals must be less than the coherence length of the source, $X_{coh}$. . Using Equation (44) and the requirement that the optical pathlength difference be less than the coherence length of the source, an upper limit on the absolute lengths of the crystals 548 and 550 is obtained. For the crystal 548, the upper length limit is

$$L_1 < X_{coh}/[B_1(1- K_1/K_2)] \quad (46)$$

Figure 28 is an example plot of the spectrum of a SLD. The SLD has a 57 microns coherence length and a center wavelength of 820 nano-meters. The maximum length of the lithium niobate crystal 548 is therefore 635 micron. From the length ratio $L_1/L_2$ = 1.092 as determined from Equation (44), the maximum length of the lithium tantalate crystal 550 is 582 micron. Thus, the maximum combined length of the two crystals 548 and 550 in the interferometer 540 is 1.217 mm.

Figure 29 is an example plot of the signal delivered by the interferometer 540 for light from an SLD.

Figure 30 is a graph of the visibility of the interference pattern as a function of the optical path difference.

For an optimum signal-to-noise ratio to facilitate signal processing, the fringe visibility of the interferometer 540 should be close to one. It is designed to have an optical path difference of 8.2 microns and is fixed on the tenth fringe from a zero pathlength difference. Making the optical path difference between the two orthogonally polarized signals an integral number of wavelengths ensures that the signal through the second polarizer 558 is maximum when the signal is aligned parallel to the polarizer 546. For the 8.2 microns optical path difference the lengths of the two crystals 548 and 550 are 91 microns and 84 microns respectively.

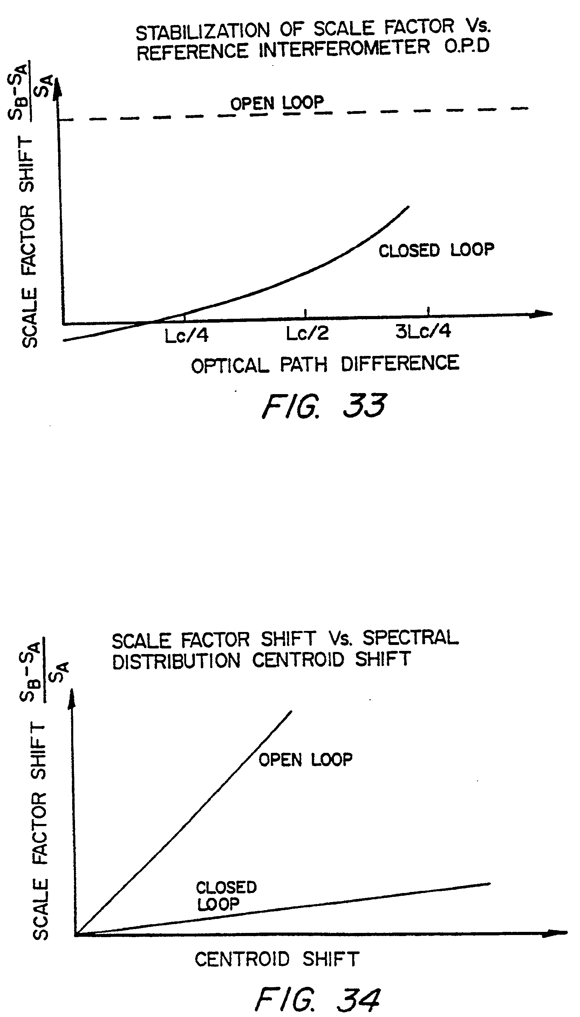

Figure 31 is a plot of the fractional phase shift per degree C, [(dY/dT)/Y], as a function of the length ratio $L_1/L_2$. For a 1% error in the length ratios, which corresponds to an error of (+/-)0.5 microns in absolute lengths of the crystals 548 and 550, the fractional phase shift per degree C in the interferometer 540 is 3.3 ppm/degree C. By controlling the crystal temperatures to (+/-)0.5 degrees C, the phase shift in the interferometer 540 can be held to within 3 ppm, which would be necessary to hold the wavelength constant to 10 ppm.

An error signal for phase-sensitive detection of the wavelength shifts in the SLD is obtained by electro-optically modulating the phase retardation in the lithium niobate crystal 548. As shown in Figure 26, crystal 548 is x-axis cut, and electrode 100 is bonded to an x-z facet. Another electrode (not shown), similar to the electrode 100, is mounted to the other x-z facet. In this configuration, use is made of the large $r_{42}$ electro-optic coefficient to reduce the voltage required to achieve a desired phase shift in the crystal 548. Using accepted values for $n_o$ = 2.2598, $r_{42}$ = $(32 \times 10^{-12})$ meters/volt, and $r_{22}$ = $(6.8 \times 10^{-12})$, the scale factor for the 91 microns long lithium niobate crystal 20 is 0.1 radian-meters/volt.

To reduce the needed applied voltage, the optical signal inside the interferometer 540 is soft-focused to a wave radius of 18 microns with a Rayleigh range of 1.0 millimeter, which is approximately 5 times the interferometer length. This relatively large Rayleigh range ensures a near planar wave front over the 175 microns long interferometer. The crystals 548 and 550 are cut to a 250 microns square cross-section in the y-z plane, which is large enough to accommodate the focused optical signal without any appreciable diffraction effects. With this 250 microns separation between the electrodes on the x-z facets of the lithium niobate crystal, the scale factor is 0.44 milliradian per volt.

The phase difference between the two differently polarized signals in the interferometer can be varied by applying an electric field to the electro-optic crystal 548. A sinusoidal electric field of amplitude Ey and angular frequency $\omega$ modulates the phase difference and provides an error signal for phase sensitive detection.

From Equation (50) the power transmitted through the polarizing beamsplitter 558 is

$$P_t = P_o[1 + V \cos(y + Z \cos \omega t)] \quad (52)$$

where y (in Equation 52) is the phase retardation in the interferometer 540 in the absence of an electric field applied to the crystal 548, and Z is the electrically induced phase retardation.

Wavelength shifts in the emission spectrum of the SLD are detected as a signal at the fundamental of the modulation frequency.

When the source stabilization system 540 is activated, the phase shift, F, induced by the crystals 548 and 550 opposes the phase shift errors, y, induced by the drift in the emission wavelength of the SLD. The transmitted power, $P_t$, is then

$$P_t = P_o[1 + V \cos(y - F + Z \cos \omega t)]. \quad (53)$$

Expanding Equation (11) gives a Bessel function series

$$P_t = P_o + P_o[J_0(Z)\cos(y-F) + J_1(Z)\sin(\omega t)\sin(y-F) + J_2(Z)\cos(2\omega t)\cos(y-F) + ...] \quad (54)$$

The servo system processes all information in the spectral vicinity of $\omega$ and ignores all other terms. The effective input signal to the servo system from Equation (54) is

$$P_t(eff) = P_oJ_1(Z)\sin(\omega t)\sin(y-F) \quad (55)$$

The effective input signal (Equation 55) is mixed in crystal 548 with the local oscillator signal of frequency $\omega$. The signal, of frequency $\omega$, is delivered from the oscillator 551 to a mixer 564 to mix with the electrical signal from the photodetector 562. The amplifier 566 filters out the alternating frequency component, and amplifies the signal from mixer 564. The feedback signal from the amplifier 566 stabilizes the emission wavelength of the SLD, and is given by

$$FB = P_oA \sin(y\text{-}F), \quad (56)$$

where A represents the electronic gain of the feedback amplifier 566. The signal FB is delivered to the optical source 72 to control the frequency of the emitted light signal. In a solid state light source, the signal FB controls the injection current. The frequency stabilization apparatus of various embodiments of the invention is used with gas discharge lasers (not shown)to control the length of the resonant cavity in which the discharge occurs.

The object of the feedback signal is to produce a phase shift, F, which cancels the phase shift y. The ability of the feedback phase shift to track the phase shift, y, induced by changes in the source wavelength is determined by the feedback loop gain of the amplifier 566. The loop gain for the servo system described is preferably large enough (>100) so that y-F is always less than 0.1 radians. The sin (y-F) term in Equation (54) can be approximated by (y-F) with negligible error. The servo system thus operates over a linear range, and parameters that provide wavelength stabilization are:

$P_o$ = 10 micro watts
G = loop gain (in radians) = 200 or greater
BW = loop bandwidth = 100 Hz
Y = loop bandwidth = 100 Hz
Z = peak phase modulation amplitude = 0.1 radians
d = servo system damping ratio > 0.5

The wavelength stabilization system 10 maintains a source wavelength stability of better than 10 ppm.

Changes in the temperature of the optical signal source change the output wavelength. It is possible to control the wavelength output of the source 72 by controlling its temperature. The base plate 544 is preferably formed of a material that exhibits the Peltier effect, and the light source is mounted on and in thermal contact with the baseplate. The phase changes caused by the crystals 548 and 550 oppose the changes in phase caused by temperature changes. The feedback signal controls the thermoelectric heater at the optical light source, and the heater controls the wavelength of the source.

Prior to deposition of the dielectric stacks 125 (Fig. 9), the substrate and fibers are preferably masked as shown in Figure 8. A mask 124 prevents deposition of the layers of the dielectric stack on part of the substrate where the reciprocity polarizer 86 is to be located. The dielectric stack is deposited everywhere on the fiber 74 except the area of the mask 124.

After deposition of the form birefringent stack 102, the mask 124 is removed, and the silica substrate 76 (is as shown in Figure 9. Next, the polarizer 86 is formed by depositing a metal layer, a dielectric layer or layers (buffers), followed by a metal layer or a second dielectric stack on the substrate (Figure 10). Only the region which deposits on the bare, polished fiber, where the mask 124 had been, changes the polarization of the optical signal in the fiber. The reciprocity polarizer 86 functions properly only if the initial dielectric stack 125 (Fig. 9) has a thickness greater than about 15 microns. If the dielectric stack 125 is not thick enough, it must be masked to limit the subsequent depositions to the bare region of the polished fiber and avoid interference with other elements on the substrate. Figure 10 shows the substrate after deposition of the dielectric stack 125 and the polarizer 86. Finally the deposited dielectric or metal stacks are overcoated with a substance such as silicon nitride to prevent contamination.

The fiber 74 (Figs. 11 and 12), which is bonded to the substrate 76, need not be of uniform diameter. The process described above allows the use of fibers which have biconical tapers. Such tapers can be used to put more of the evanescent field into the polarizer stack to optimize the performance of the polarizer 86. For example, if non-uniform diameters are used, then extra jigging is needed to locate the upper surface edge of the core/cladding boundary at the same or known levels shown in Figure 11. Such jigging could be made by ion milling or anisotropic etching of silicon wafers.

III. Advantages of the Embodiment:

This embodiment has advantages over the prior art, including: The form birefringence induced by the dielectric stacks can be made quite large ($\Delta n \geq 0.1$), which is larger than the birefringence of LiNbO3. The larger birefringence causes a short depolarization length, and a smaller degree of polarization. With a smaller degree of polarization, competing effectshave a shorter length in which to accumulate, and performance of the gyro is improved.

Using the described apparatus and techniues, the fiber can be made to guide a single polarization signal. The use of single polarization fiber reduces further the amount of non-reciprocal light, reducing its interference with the reciprocal light used in the gyroscope.

The bias is reduced and performance is again improved, and the polarizer extinction ratio requirement is reduced.

By the polishing and deposition process, the birefringent axis of the fiber 74 on the substrate 76 is self aligned with the transmission axis of the reciprocity polarizer 86. Using conventional polishing techniques, self alignment of one arc-sec or less is realizable, and the amount of nonreciprocal light that can interfere with the reciprocal light in the gyroscope is reduced. Bias error and polarizer extinction ratio requirements are also reduced by this alignment.

The ability of create controlled artificial birefringence using dielectric stacks enables matching between the spatial mode of the fiber and the spatial mode of the polarizer stack, thereby increasing the extinction ratio, whether the fiber is polished into the core or only near the core. Also thermal matching of the indices of refraction between the polarizer stack and the fiber enables fabrication of a thermally stable polarizer.

The fiber used in the sensing loop can be commercial single mode fiber, thereby reducing cost.

Conventional polarization stabilization devices such as active controllers, continuous and discrete depolarizers and polarization maintaining fiber can be used either in the loop or prior to the module 70. . Their purpose is maintenance of the signal strength. They do not further reduce the bias in the fiber optic rotation sensor formed according to the present invention. Simpler active servos, lower quality depolarizers, or poor quality PM fiber (extinction ratio less than 10 dB) may be used, and the system is simplified. Life cycle costs are reduced.

Because this process uses many of the techniques of integrated optics and electronics, the modules can be made by batch processes, thereby reducing cost and fabrication time.

## IV. Method of Operation

Having described the gyroscope system and the various components thereof, the method of operation of the fiber optic gyroscope is described in detail (see Fig. 12).

The clockwise optical signal passes through the phase modulator in a time interval, t, which causes a phase shift of $f_m \sin (\omega_m t)$ where $f_m$ and $\omega_m$ are the amplitude and frequency, respectively, of the signal delivered by the phase modulator 88. The frequency shifter 92 shifts the frequency of the clockwise signal from $f_o$ to $f_o + \Delta f$ and changes the polarization of the clockwise signal from fast to slow. The clockwise signal next passes through the directional coupler 87, the polarizer 86 and the directional coupler 78 to deliver a signal to the photodetector 96. The total phase change of the clockwise signal incident upon the photodetector is given by

$$f_{cw} = 1/2f_s + f_m \sin \omega_m t + 2\Pi f_o T \quad (57)$$

where $f_o$ is the source frequency, T is the propagation time around the loop, and $f_s$ is the Sagnac phase shift.

After passing through the frequency shifter, the frequency of the counterclockwise signal becomes $f_o + \Delta f$. The frequency shifter also changes the polarization of the counterclockwise signal from fast to slow. The counterclockwise signal travels through the phase modulator at a time $t + T$, where T is defined above. The counterclockwise signal undergoes a phase shift of $f_m \sin [\omega(t + T)]$ in the phase modulator. The counterclockwise signal propagates through the directional coupler 87, the linear polarizer 86 and the directional coupler 78 to the photodetector 96. The total phase of the counterclockwise signal is

$$f_{ccw} = -1/2f_s + f_m \sin\omega_m(t + T) + 2\Pi(f_o + \Delta f)T \quad (57A)$$

where the variables have been previously defined. The photocurrent of electrical signal, S, from the detector, which is preferably a photodiode, with both the clockwise and counterclockwise signals being incident on it is

$$S = (1/2)S_o[1 + \cos (f_{cw} - f_{ccw})] \quad (58)$$

where S is an amplitude constant.

By picking $\omega_m = \Pi/T$, the signal of Equation (58) becomes

$$S = (1/2)S_o[1 + \cos(f_s + 2\Pi\Delta f T + 2f_m \sin \omega_m t)] \quad (59)$$

The Sagnac phase shift in terms of system parameters becomes

$$2\Pi L D\Omega/(\lambda c) = -2\Pi\Delta f n L/c \quad (60)$$

and hence $\Omega = - \lambda n \Delta f/D$, where $\lambda$ is the free space source signallength, n is the effective refractive index of the guided mode and D is the diameter of the sensing loop, $\Omega$ is the input rotation rate of the sensing loop, and c is the free space velocity of light.

The essential operational features are that the clockwise and counterclockwise signals traverse identical optical paths, including the same polarization path, and that the frequency shift $\Delta f$ is adjusted to null the phase difference between the clockwise and counterclockwise signals when they recombine in the directional coupler. The rate of rotation may then be determined by the amount of frequency shift required to achieve the desired null phase difference. All that is necessary for finding the rotation rate are the source signallength, the effective refractive index of the guided mode in the fiber, and the diameter of the sensing loop.

Although the present invention has been described with reference to specific embodiments, it should be understood that these embodiments are exemplary preferred embodiments and that modifications may be made without departing from the scope of possible embodiments of the invention as defined in the appended claims.

## Claims

1. A fiber optic rotation sensor (70) having a substrate (76); a first optical fiber (74) having a central core (100) and a surrounding cladding (112), a first length (102) of said first optical fiber having a region of said cladding removed therefrom to form a first planar cladding surface, said first length (102) of said first optical fiber being mounted to said substrate (76);

a second optical fiber (80) having a central core and a surrounding cladding (107), a second length (104) of said second optical fiber having a region of its said cladding removed to form a second planar cladding surface, the length (104) of said second optical fiber being mounted to said substrate;

a first fiber optical coupler (78) formed between said first and second optical fibers; and means (72) for introducing an optical signal into said first optical fiber; and an angular velocity sensing coil (90) of optical fiber, characterized by:

a first guided wave reciprocity polarizer (86) formed on the planar cladding surface of said first optical fiber, said polarizer having a transmission axis aligned with an axis of birefringence of said first optical fiber (74) to interact with said first optical fiber to remove a first predetermined linear polarization component from optical signals guided by said first optical fiber while permitting a second predetermined linear polarization component to propagate unattenuated in said first optical fiber;

a third optical fiber having a central core and a surrounding cladding, a third length of said third optical fiber having a region of its said cladding removed to form a third planar cladding surface, the length of said third optical fiber being mounted to said substrate;

a second fiber optical coupler (87) formed between said first and third optical fibers; and

said angular velocity sensing coil (90) being arranged to guide optical signals in both directions between said first and third optical fibers, said first and third optical fibers and said second optical coupler (87) cooperating to introduce counterpropagating light optical signals into said sensing coil (90).

2. The fiber optic rotation sensor of Claim 1 further comprising:

means (SLD) for stabilizing the frequency of the optical signal of said means (72) for introducing an optical signal, connected to receive such optical signal, to produce an error signal that is a measure of the deviation of the frequency of said optical signal from a predetermined frequency, and to deliver said error signal to said means (72) for introducing an optical signal.

3. The fiber optic rotation sensor of Claim 2, and further comprising:

a second guided wave birefringent polarizer (75) attached to said substrate and said first cladding surface such that said first optical coupler (78) is between said second guided wave birefringent polarizer (75) and said first guided wave reciprocity polarizer (86); and

a third guided wave birefringent polarizer (91) attached to said second cladding surface such that said second optical coupler (87) is between said third guided wave birefringent polarizer (91) and said first guided wave reciprocity polarizer (86).

4. A fiber optic rotation sensor according to Claim 3 wherein at least one of said guided wave polarizers (75, 91) is a form birefringent polarizer.

5. A fiber optic rotation sensor according to Claim 3 wherein at least one of said guided wave polarizers (75, 91) is a plasmon birefringent polarizer.

6. A fiber optic rotation sensor according to Claim 3 wherein at least one of said guided wave polarizers (75, 91) is a bulk anisotropic crystal birefringent polarizer.

7. The fiber optic rotation sensor of any one of Claims 3-6 wherein said first optical fiber (74) is a polarization maintaining fiber.

8. The fiber optic rotation sensor of any one of Claims 1-7 wherein said guided wave reciprocity polarizer (86) comprises at least one layer of a material deposited on said first planar cladding surface such that the polarizer transmission axis is self aligned with the axis of birefringence of said first fiber.

9. The fiber optic rotation sensor of Claim 8 wherein said reciprocity polarizer (86) comprises a plurality of layers of material of different refractive index.

10. The fiber optic rotation sensor of Claim 9 wherein each said polarizer comprises;

a core surface formed at a location on said first optical fiber from which at least a portion of said cladding, to the core surface, and a region of said core have been removed; and

a form birefringent polarizer (75) placed on said core surface, intercepting the evanescent field of said fiber.

11. The fiber optic rotation sensor of Claim 8 wherein said polarizer comprises:

a core surface formed at a location on said first optical fiber from which at least a portion of said cladding, to the core surface, and a region of said core have been removed; and

a metal film placed on said core surface, intercepting the evanescent field of said fiber.

12. The fiber optic rotation sensor of Claim 11 wherein said polarizer further comprises a dielectric layer (120) between said metal layer and said core surface.

13. The fiber optic rotation sensor of Claim 8 wherein said polarizer comprises:

a core surface formed at a location of said first optical fiber from which at least a portion of said cladding, to the core surface, and a region of said core have been removed; and

a bulk anisotropic crystal placed on said core surface, intercepting the evanescent field of said fiber.

14. A method for forming a fiber optic rotation sensor, having first (74), second (80) and third optical fibers; and first (78) and second fiber optical (87) couplers connecting said second (80) and third fibers to said first fiber (74), characterised by fabricating a substrate (76); fabricating said first and second fiber optical couplers (78, 87) on said substrate, removing part of said cladding into the evanescent field of said fibers at predetermined regions thereof;

polishing the surface of said remaining cladding at said predetermined regions;

attaching said fibers (74, 80) and couplers (78, 87) to said substrate;

and fabricating fiber optic rotation sensor components on said fibers at said predetermined regions.

15. A method as recited in Claim 14 in which:

said predetermined regions are positioned at opposite ends of said first fiber (74) between said couplers (78, 87) of said first fiber, at opposite ends of said second fiber (80), and at a first end of said second fiber.

16. A method as recited in Claim 15 and further comprising the steps of:

fabricating guided wave birefringent polarizers (75, 91) in said predetermined regions of said first fiber;

fabricating sinks (82,94) for removing energy in said predetermine regions on said first end of said second fiber and a first end of said third fiber; and

fabricating a modulator in said predetermined region on a second end of said third fiber.

17. A method as recited in Claim 15 and further comprising the steps of:

fabricating guided wave birefringent polarizers (75, 91) in said predetermined regions on a first end and between said couplers of said first fiber;

fabricating sinks (82, 94) for removing energy in said predetermined regions on said first end of said second fiber and a first end of said third fiber;

fabricating a guided wave birefringent polarizer (75) in a predetermined region on a second end of said third fiber; and

fabricating a modulator (88) in a predetermined region, on the second end of said first fiber.

18. The method recited in any one of Claims 14-17 and further comprising the step of:

fabricating a protective covering (570) sealing said fibers, components, and said substrate.

19. The method recited in Claim 18 in which:

said polarizer (86) between said couplers is chosen from the class consisting of a form birefringent reciprocity polarizer, a plasmon polarizer, or a bulk anisotropic crystal polarizer;

in which the other two said polarizers (75, 91) are chosen from the class consisting of a form birefringent polarizer, a plasmon polarizer, or a bulk anisotropic crystal polarizer; and

said sinks (94) are chosen from the class consisting of a form birefringent polarizer, or a plasmon polarizer.

## Patentansprüche

1. Faseroptik-Drehsensor (70), enthaltend: ein Substrat (76); eine erste optische Faser (74) mit einem zentralen Kern (100) und einer Umhüllung (112), wobei ein erster Längenabschnitt (102) der ersten optischen Faser einen Abschnitt aufweist, an dem die Umhüllung davon entfernt ist, um eine erste ebene Umhüllungsfläche zu bilden, wobei der erste Längenabschnitt (102) der ersten optischen Faser an dem Substrat (76) befestigt ist;

eine zweite optische Faser (80) mit einem zentralen Kern und einer Umhüllung (107), wobei ein zweiter Längenabschnitt (104) der zweiten optischen Faser einen Bereich hat, wo die Umhüllung entfernt ist, um eine zweite ebene Umhüllungsfläche zu bilden, welcher Längenabschnitt (104) der zweiten optischen Faser an dem Substrat befestigt ist;

einen ersten faseroptischen Koppler (78), der zwischen den ersten und zweiten optischen Fasern ausgebildet ist; und Einrichtungen zum Einleiten eines optischen Signals in die erste optische Faser; und eine Winkelgeschwindigkeitssensorspule (90) der optischen Faser, **gekennzeichnet durch:**

einen ersten Wellenleiter-Reziprozitätspolarisierer (86), der auf der ebenen Umhüllungsfläche der ersten optischen Faser ausgebildet ist und der eine Durchlaßachse hat, die auf eine Doppelbrechungsachse der ersten optischen Faser (74) ausgerichtet ist, um mit der ersten optischen Faser in Wechselwirkung zu treten, um eine erste vorbestimmte lineare Polarisationskomponente aus den optischen Signalen zu entfernen, die von der ersten optischen Faser geführt werden, während er erlaubt, eine zweite vorbestimmte lineare Polarisationskomponente sich ungedämpft in der ersten optischen Faser auszubreiten;

eine dritte optische Faser mit einem zentralen kern und einer Umhüllung, wobei ein dritter Längenabschnitt der dritten optischen Faser einen Bereich hat, an dem seine Umhüllung entfernt ist, um eine dritte ebene Umhüllungsfläche zu bilden, welcher Längenabschnitt der dritten optischen Faser an dem Substrat befestigt ist;

einen zweiten faseroptischen Koppler (87), der zwischen den ersten und dritten optischen Fasern ausgebildet ist; und

wobei die Winkelgeschwindigkeitssensorspule (90) dazu eingerichtet ist, optische Signale in beiden Richtungen zwischen den ersten und dritten optischen Fasern zu führen, wobei die ersten und dritten optischen Fasern und der zweite optische Koppler (87) zusammenwirken, um die sich in entgegengesetzter Richtung ausbreitenden lichtoptischen Signale in die Sensorspule (90) einzuleiten.

2. Faseroptischer Drehsensor nach Anspruch 1, weiterhin enthaltend:

eine Einrichtung (SLD) zum Stabilisieren der Frequenz des optischen Signals der Einrichtung (72) zum Einleiten eines optischen Signals, die so angeschlossen ist, daß sie das optische Signal aufnimmt, um ein Fehlersignal zu erzeugen, das ein Maß für die Frequenzabweichung des optischen Signals von einer vorbestimmten Frequenz ist, und ein Fehlersignal an die genannte Einrichtung (72) zum Einleiten eines optischen Signals abzugeben.

3. Faseroptischer Drehsonsor nach Anspruch 2, weiterhin enthaltend:

einen zweiten Wellenleiter-Doppelbrechungspolarisierer (75), der an dem Substrat und der ersten Umhüllungsfläche derart befestigt ist, daß der erste optische Koppler (78) zwischen dem zweiten Wellenleiter-Doppelbrechungspolarisierer (75) und dem ersten Wellenleiter-Reziprozitätspolarisierer (86) ist; und

einen dritten Wellenleiter-Doppelbrechungspolarisierer (91), der an der zweiten Umhüllungsfläche derart befestigt ist, daß der zweite optische Koppler (87) zwischen dem dritten Wellenleiter-Doppelbrechungspolarisierer (91) und dem ersten Wellenleiter-Reziprozitätspolarisierer (86) ist.

4. Faseroptischer Drehsensor nach Anspruch 3, bei dem wenigstens einer der Wellenleiter-Polarisierer (75, 91) ein Formdoppelbrechungspolarisierer ist.

5. Faseroptischer Drehsensor nach Anspruch 3, bei dem wenigstens einer der Wellenleiter-Polarisierer (75, 91) ein Plasmon-Doppelbrechungspolarisierer ist.

6. Faseroptischer Drehsensor nach Anspruch 3, bei dem wenigstens einer der Wellenleiter-Polarisierer (75, 91) ein anisotropischer Sammelkristall-Doppelbrechungspolariserer ist.

7. Faseroptischer Drehsensor nach einem der Ansprüche 3 bis 6, bei dem die erste optische Faser (74) eine die Polarisation aufrechterhaltende Faser ist.

8. Faseroptischer Drehsensor nach einem der Ansprüche 1 bis 7, bei der Wellenleiter-Reziprozitätspolarisierer (86) wenigstens eine ebene Umhüllungsfläche aufweist derart, daß die Polarisiererdurchlaßachse auf die Doppelbrechungsachse der ersten Faser selbstausgerichtet ist.

9. Faseroptischer Drehsensor nach Anspruch 8, bei dem der Reziprozitätspolarisierer (86) mehrere Materialschichten von unterschiedlichem Brechungsindex enthält.

10. Faseroptischer Drehsensor nach Anspruch 9, bei dem jeder Polarisierer enthält:

eine Kernfläche, die an einer Stelle der ersten optischen Faser ausgebildet ist, von der wenigstens ein Teil der Umhüllung zur Kernoberfläche und ein Bereich des Kerns entfernt worden sind; und

ein Formdoppelbrechungspolarisierer (75), der auf der Kernfläche angeordnet ist und das Evaneszenzfeld der Faser aufnimmt.

11. Faseroptischer Drehsensor nach Anspruch 8, bei dem der Polarisierer enthält:

eine Kernfläche, die an einer Stelle an der ersten optischen Faser ausgebildet ist, von der wenigstens ein Teil der Umhüllung zur Kernoberfläche und ein Bereich des Kerns entfernt worden sind; und

einen Metallfilm, der auf der Kernoberfläche angeordnet ist und das Evaneszenzfeld der Faser aufnimmt.

12. Faseroptischer Drehsensor nach Anspruch 11, bei dem der Polarisierer weiterhin eine dielektrische Schicht (120) zwischen der Metallschicht und der Kernoberfläche aufweist.

13. Faseroptischer Drehsensor nach Anspruch 8, bei dem der Polarisierer enthält:

eine Kernoberfläche, die an einer Stelle der ersten optischen Faser ausgebildet ist, von der wenigstens ein Teil der Umhüllung zur Kernoberfläche und ein Bereich des Kerns entfernt worden sind; und

ein anisotropischer Sammelkristall, der auf der Kernoberfläche angeordnet ist und das Evaneszenzfeld der Faser aufnimmt.

14. Verfahren zum Bilden eines faseroptischen Drehsensors, enthaltend erste (74), zweite (80) und dritte optische Fasern; und erste (78) und zweite faseroptische Koppler (87), die die zweiten (80) und dritten Fasern mit der ersten Faser (74) verbinden, **gekennzeichnet durch** die Herstellung eines Substrats (76); die Herstellung der ersten und zweiten faseroptischen Koppler (78, 87) auf dem Substrat, das Entfernen eines Teils der Umhüllung in dem Evaneszenzfeld der Fasern an vorbestimmten Bereichen derselben; das Polieren der Oberfläche der verbliebenen Umhüllung an den vorbestimmten Bereichen; das Anbringen der Fasern (74, 80) und der Koppler (78, 87) an dem Substrat;

und das Herstellen von faseroptischen Drehsensorkomponenten auf den Fasern an dem vorbestimmten Bereichen.

15. Verfahren nach Anspruch 14, bei dem:

die vorbestimmten Bereiche an gegenüberliegenden Enden der ersten Faser (74) zwischen den Kopplern (78, 87) der ersten Faser, an entgegengesetzten Enden der zweiten Faser (80) und an einem ersten Ende der zweiten Faser gelegen sind.

16. Verfahren nach Anspruch 15, weiterhin enthaltend die Schritte:

Herstellen von Wellenleiter-Doppelbrechungspolarisierern (75, 91) in den vorbestimmten Bereichen der ersten Fasern;

Herstellen von Senken (82, 94) zum Entfernen von Energie in den vorbestimmten Bereichen an dem ersten Ende der zweiten Faser und einem ersten Ende der dritten Faser; und

Herstellen eines Modulators in dem vorbestimmten Bereich an einem zweiten Ende der dritten Faser.

17. Verfahren nach Anspruch 15, weiterhin enthaltend die Schritte:

Herstellen von Wellenleiter-Doppelbrechungspolarisierern (75, 91) in den vorbestimmten Bereichen an einem erste Ende zwischen den Kopplern der ersten Faser;

Herstellen von Senken (82, 94) zum Entfernen von Energie in den vorbestimmten Bereichen am ersten Ende der zweiten Faser und einem ersten Ende der dritten Faser;

Herstellen eines Wellenleiter-Doppelbrechungspolarisierers (75) in einem vorbestimmten Bereich an einem zweiten Ende der dritten Faser; und

Herstellen eines Modulators (88) in einem vorbestimmten Bereich am zweiten Ende der ersten Faser.

18. Verfahren nach einem der Ansprüche 14 bis 17, weiterhin enthaltend die Schritte:

Herstellen einer Schutzabdeckung (570), die die Fasern, die Komponenten und das Substrat einschließt.

19. Verfahren nach Anspruch 18, bei dem:

der Polarisierer (86) zwischen den Kopplern aus der Klasse ausgewählt ist, die aus einem Formdoppelbrechungsreziprozitätspolarisierer, einem Plasmonpolarisierer oder einem anisotropischen Sammelkristallpolarisierer besteht;

wobei die anderen zwei Polarisierer (75, 91) aus der Klasse ausgewählt sind, die aus einem Formdoppelbrechungspolarisierer, einem Plasmonpolarisierer oder einem anisotropischen Sammelkristallpolarisierer besteht; und

wobei die Senken (94) aus der Klasse ausgewählt sind, die aus einem Formdoppelbrechungspolarisierer oder einem Plasmonpolarisierer besteht.

## Revendications

1. Capteur (70) de rotation à fibres optiques ayant un substrat (76) ;

une première fibre optique (74) ayant un coeur central (100) et une gaine entourante (112), une région de ladite gaine étant enlevée d'une première longueur (102) de ladite première fibre optique pour former une première surface plane de gaine, ladite première longueur (102) de ladite première fibre optique étant montée sur ledit substrat (76) ;

une deuxième fibre optique (80) ayant un coeur central et une gaine entourante (107), une région de sa gaine étant enlevée d'une deuxième longueur (104) de ladite deuxième fibre optique pour former une deuxième surface plane de gaine, la longueur (104) de ladite deuxième fibre optique étant montée sur ledit substrat ;

un premier coupleur (78) de fibres optiques formé entre lesdites première et deuxième fibres optiques ; et des moyens (72) destinés à introduire un signal optique dans ladite première fibre optique ; et un enroulement (90) de captage de vitesse angulaire en fibre optique, caractérisé par :

un premier polariseur (86) d'ondes guidées à réciprocité formé sur la surface plane de la gaine de ladite première fibre optique, ledit polariseur ayant un axe de transmission aligné avec un axe de biréfringence de ladite première fibre optique (74) pour interagir avec ladite première fibre optique afin d'éliminer une première composante de polarisation linéaire prédéterminée de signaux optiques guidés par ladite première fibre optique tout en permettant à une seconde composante de polarisation linéaire prédéterminée de se propager sans affaiblissement dans ladite première fibre optique ;

une troisième fibre optique ayant un coeur central et une gaine entourante, une région de ladite gaine étant enlevée d'une troisième longueur de ladite troisième fibre optique pour former une troisième surface plane de gaine, la longueur de ladite troisième fibre optique étant montée sur ledit substrat ;

un second coupleur (87) de fibres optiques formé entre lesdites première et troisième fibres optiques ; et

ledit enroulement (90) de captage de vitesse angulaire étant disposé de façon à guider des signaux optiques dans les deux sens entre lesdites première et troisième fibres optiques, lesdites première et troisième fibres optiques et ledit second coupleur optique (87) coopérant pour introduire des signaux optiques lumineux se propageant en sens contraires dans ledit enroulement de captage (90).

2. Capteur de rotation à fibres optiques selon la revendication 1, comportant en outre :

des moyens (SLD) destinés à stabiliser la fréquence du signal optique desdits moyens (72) destinés à introduire un signal optique, connectés de façon à recevoir ce signal optique, pour produire un signal d'erreur qui est une mesure de l'écart de la fréquence dudit signal optique par rapport à une fréquence prédéterminée, et pour délivrer ledit signal d'erreur auxdits moyens (72) destinés à introduire un signal optique.

3. Capteur de rotation à fibres optiques selon la revendication 2, et comportant en outre :

un deuxième polariseur biréfringent (75) d'ondes guidées relié audit substrat et à ladite première surface de gaine afin que ledit premier coupleur optique (78) se trouve entre ledit deuxième polariseur biréfringent (75) d'ondes guidées et ledit premier polariseur (86) d'ondes guidées à réciprocité ; et

un troisième polariseur biréfringent (91) d'ondes guidées relié à ladite deuxième surface de gaine afin que ledit second coupleur optique (87) se trouve entre ledit troisième polariseur biréfringent (91) d'ondes guidées et ledit premier polariseur (86) d'ondes guidées à réciprocité.

4. Capteur de rotation à fibres optiques selon la revendication 3, dans lequel au moins l'un desdits polariseurs (75, 91) d'ondes guidées est un polariseur biréfringent de forme.

5. Capteur de rotation à fibres optiques selon la revendication 3, dans lequel au moins l'un desdits polariseurs (75, 91) d'ondes guidées est un polariseur biréfringent de plasmons.

6. Capteur de rotation à fibres optiques selon la revendication 3, dans lequel au moins l'un desdits polariseurs (75, 91) d'ondes guidées est un polariseur biréfringent à cristal anisotrope volumique.

7. Capteur de rotation à fibres optiques selon l'une quelconque des revendications 3-6, dans lequel ladite première fibre optique (74) est une fibre à maintien de polarisation.

8. Capteur de rotation à fibres optiques selon l'une quelconque des revendications 1-7, dans lequel ledit polariseur (86) d'ondes guidées à réciprocité comprend au moins une couche d'une matière déposée sur ladite première surface plane de gaine afin que l'axe de transmission du polariseur s'aligne de lui-même avec l'axe de biréfringence de ladite première fibre.

9. Capteur de rotation à fibres optiques selon la revendication 8, dans lequel ledit polariseur (86) à réciprocité comprend plusieurs couches de matière d'indices de réfraction différents.

10. Capteur de rotation à fibres optiques selon la revendication 9, dans lequel chaque polariseur comporte :

une surface de coeur formée en un emplacement sur ladite première fibre optique duquel au moins une partie de ladite gaine, jusqu'à la surface du coeur, et une région dudit coeur ont été enlevées ; et

un polariseur biréfringent (75) de forme placé sur ladite surface de coeur, interceptant le champ évanescent de ladite fibre.

11. Capteur de rotation à fibres optiques selon la revendication 8, dans lequel ledit polariseur comporte :

une surface de coeur formée en un emplacement, sur ladite première fibre optique, duquel au moins une partie de ladite gaine, jusqu'à la surface du coeur, et une région dudit coeur ont été enlevées ; et

un film métallique placé sur ladite surface du coeur, interceptant le champ évanescent de ladite fibre.

12. Capteur de rotation à fibres optiques selon la revendication 11, dans lequel ledit polariseur comprend en outre une couche diélectrique (120) entre ladite couche métallique et ladite surface du coeur.

13. Capteur de rotation à fibres optiques selon la revendication 8, dans lequel ledit polariseur comporte :

une surface de coeur formée en un emplacement de ladite première fibre optique duquel au moins une partie de ladite gaine, jusqu'à la surface du coeur, et une région dudit coeur ont été enlevées ; et

un cristal anisotrope volumique placé sur ladite surface du coeur, interceptant le champ évanescent de ladite fibre.

14. Procédé pour former un capteur de rotation à fibres optiques, comportant des première (74), deuxième (80) et troisième fibres optiques ; et des premier (78) et second (87) coupleurs de fibres optiques connectant lesdites deuxième (80) et troisième fibres à ladite première fibre (74), caractérisé en ce qu'il consiste à fabriquer un substrat (76) ; à fabriquer lesdits premier et second coupleurs (78, 87) de fibres optiques sur ledit substrat,

27

EP 0 379 520 B1

à enlever une partie de ladite gaine dans le champ évanescent desdites fibres en des régions prédéterminées de celles-ci ;

à polir la surface de ladite gaine restante dans lesdites régions prédéterminées ; à relier lesdites fibres (74, 80) et lesdits coupleurs (78, 87) audit substrat ;

et à fabriquer des constituants du capteur de rotation à fibres optiques sur lesdites fibres auxdites régions prédéterminées.

15. Procédé selon la revendication 14, dans lequel :

lesdites régions prédéterminées sont placées à des extrémités opposées de ladite première fibre (74) entre lesdits coupleurs (78, 87) de ladite première fibre, à des extrémités opposées de ladite deuxième fibre (80) et à une première extrémité de ladite deuxième fibre.

16. Procédé selon la revendication 15, comprenant en outre les étapes qui consistent :

à fabriquer des polariseurs biréfringents (75, 91) d'ondes guidées dans lesdites régions prédéterminées de ladite première fibre ;

à fabriquer des dissipateurs (82, 94) destinés à éliminer de l'énergie dans lesdites régions prédéterminées sur ladite première extrémité de ladite deuxième fibre et une première extrémité de ladite troisième fibre ; et

à fabriquer un modulateur dans ladite région prédéterminée sur une seconde extrémité de ladite troisième fibre.

17. Procédé selon la revendication 15, comprenant en outre les étapes qui consistent :

à fabriquer des polariseurs biréfringents (75, 91) d'ondes guidées dans lesdites régions prédéterminées sur une première extrémité et entre lesdits coupleurs de ladite première fibre ;

à fabriquer des dissipateurs (82, 94) pour éliminer de l'énergie dans lesdites régions prédéterminées sur ladite première extrémité de ladite deuxième fibre et une première extrémité de ladite troisième fibre ;

à fabriquer un polariseur biréfringent (75) d'ondes guidées dans une région prédéterminée sur une seconde extrémité de ladite troisième fibre ; et

à fabriquer un modulateur (88) dans une région prédéterminée, sur la seconde extrémité de ladite première fibre.

18. Procédé selon l'une quelconque des revendications 14-17, comprenant en outre l'étape qui consiste :

à fabriquer une enveloppe protectrice (570) renfermant de façon étanche lesdites fibres, les composants et ledit substrat.

19. Procédé selon la revendication 18, dans lequel :

ledit polariseur (86) entre lesdits coupleurs est choisi dans la classe constituée d'un polariseur biréfringent de forme à réciprocité, d'un polariseur de plasmons ou d'un polariseur à cristal anisotrope volumique ;

dans lequel les deux autres desdits polariseurs (75, 91) sont choisis dans la classe constituée d'un polariseur biréfringent de forme, d'un polariseur de plasmons ou d'un polariseur à cristal anisotrope volumique ; et

lesdits dissipateurs (94) sont choisis dans la classe constituée d'un polariseur biréfringent de forme ou d'un polariseur de plasmons.

28

PRIOR ART

FIG. 1

FIG. 2

FIG. 3

FIG. 4

*FIG. 5*

*FIG. 6*

*FIG. 7*

*FIG. 8*

*87*

*125*

*102*

*104*

*FIG. 9*

*86*

*87*

*102*

*104*

*FIG. 10*

*74*

*76*

*FIG. 11*

FIG. 12

FIG. 13

FIG. 14

FIG. 15

FIG. 16

FIG. 19

FIG. 17

FIG. 18

FIG. 20

FIG. 21

FIG. 22

EP 0 379 520 B1

FIG. 23

FIG. 24

FIG. 32

SLOPE SENSITIVITY $\frac{d[I(\omega)]}{d\lambda}$

OPTICAL PATH DIFFERENCE

Lc/4    Lc/2    3Lc/4    Lc

FIG. 25A

FIG. 25B

EP 0 379 520 B1

FIG. 26

FIG. 27

FIG. 28

FIG. 29

FIG. 30

FIG. 31

41

STABILIZATION OF SCALE FACTOR Vs.
REFERENCE INTERFEROMETER O.P.D

*FIG. 33*

SCALE FACTOR SHIFT Vs. SPECTRAL
DISTRIBUTION CENTROID SHIFT

*FIG. 34*

FIG. 35

FIG. 36